# EUROPEAN PATENT SPECIFICATION

(11) **EP 3 040 235 B1**
(45) Date of publication and mention of the grant of the patent: **08.01.2020**
(21) Application number: 15197907.7
(22) Date of filing: 03.12.2015
(51) Int. Cl.: B60P 1/02, B60P 1/64

(54) **TRAILER FOR A ROUTE TRAIN**
ANHÄNGER EINES ROUTENZUGES
REMORQUE DE CHARIOT TRACTEUR

(30) Priority: 03.12.2014 IT PI20140091
(43) Date of publication of application: 06.07.2016
(73) Proprietor: Movincar SPA, 10040 Leinii (TO) (IT)
(72) Inventor: ROSSI, Claudio, RIVAROSSA (TO) (IT)
(74) Representative: Celestino, Marco

(56) References cited:
- EP-A1- 1 352 815
- EP-A1- 1 743 828
- EP-A2- 2 660 127
- DE-A1-102005 055 235
- DE-A1-102013 008 242
- DE-U1-202013 001 255

## Description

### Field of the invention

The present invention relates to a vehicle for carrying a palletized material, i.e. a material that provides a socket configured for being engaged by at least one lifting forks, or that is arranged on a support providing such a socket. In particular, the invention relates to a modular-type towable vehicle, i.e. to a vehicle having a connection means for connecting to similar vehicles in order to form a train, for carrying said material.

### Prior art - Technical problems

Vehicles are known in the art of carrying palletized material, which comprise: a fork frame, substantially rectangular in a top plan view; a plurality of lifting forks that extend parallel to each other within the frame from a longitudinal side of the frame; four wheels arranged at the vertices of the frame; a lifting device, comprising a plurality of lifting groups each having a lower portion connected to a wheel, an upper portion integral to the fork frame and a hydraulic actuators for lifting and lowering the frame with respect to the wheels.

Such carriages have essentially the drawback that the fork lifting and lowering device is complicated, since it comprises at least four piston-cylinder groups, one for each wheel of a carriage, which are required for vertically displacing the forks and the material arranged thereon. Failures are therefore probable, which means high costs related to both emergency and routine maintenance.

Moreover, the structure of the above lifting device, in which the wheels are connected to the fork frame through the hydraulic groups of the lifting device, makes it difficult to use pivoting wheels, and even more steered wheels, i.e. wheels whose orientation is remotely controlled. When a train consisting of a plurality of carriages that have non-orientable wheels is caused to turn, the relative angle formed by adjacent carriages depends upon the connection rods arranged between the carriages, which are pivotally connected to the end portions of the carriages. In these conditions, it is hard for such a train to make an acute turn, which often occurs when more aisles or passageways must be travelled to displace materials, as it is the case in most industrial warehouses.

In order to correctly make acute turns, the need is also felt of coordinating the orientation of front and rear wheels, but the steering transmission is complicated because the space between the front wheels and the rear wheels, where the vertically translating forks are arranged, must be kept clear.

Vehicles for carrying a palletized material are described, for instance, in DE 20 2013 001 255 U1, EP1352815A1, DE 10 2005 055 235 A1. However, the teachings of such documents cannot enable simultaneously, i.e. in a same vehicle, an easy and wide lifting and lowering fork movement from and down to the ground, an ease of construction of the fork actuating device, a swift acute turning manoeuvre, as frequently required in industrial warehouses and, more in general, in an industrial environment, and a space for moving the forks and a hand truck substantially free from the parts of the steering transmission device, even when the latter are operated.

### Summary of the invention

It is therefore a feature of the present invention to provide a fork vehicle for carrying a palletized material that makes it possible to easily lower the forks down to very close to the ground.

It is also a feature of the invention to provide such a vehicle in which the actuation device for lifting and lowering the forks has a construction simpler than what is provided by the prior art.

It is then a feature of the invention to provide such a vehicle for forming a train, in order to convey a palletized material, comprising a plurality of wagons, which can correctly follow a path comprising acute bends.

It is also a feature of the invention to provide such a vehicle in which the steering transmission between the wheels of the carriage does not substantially hinder the movement of the forks and of the carriage, in connection with neither manoeuvrability nor size.

It is also a feature of the invention to provide such a vehicle that assists an operator to lock and to unlock the palletized material on said forks.

These and other objects are achieved by a structure of vehicle for carrying a palletized material, comprising:
- a frame comprising a longitudinal rod and first and second transversal rods that extend parallel to each other starting from respective opposite ends of the longitudinal rod on the same side of the longitudinal rod, so as to form a "C"-shaped structure;
- a counterframe slidingly arranged along a guide integral to the frame proximate to the longitudinal rod;
- at least one couple of forks arranged parallel to each other and mounted to the counterframe substantially orthogonal to the longitudinal rod;
- a lifting means for displacing the counterframe along with the forks by a predetermined stroke in a lifting direction between a lowered loading/unloading position and a transport position raised with respect to the loading/unloading position, wherein the lifting means comprises at least one actuator arranged to cause the counterframe to carry out a relative movement with respect to the frame on the guide along the lifting direction;
- a first couple of conjugate pivoting wheels and a second couple of conjugate pivoting wheels that are arranged at first and second transversal rods, respectively, so as to allow the frame to move;
- a steerable towing shaft for towing the frame on at least one of the first couple and of the second couple of pivoting wheels, according to a towing direction;
- at least one couple of forks arranged parallel to each other and mounted to the frame substantially orthogonal to the towing direction;
- a steering transmission device configured for causing a wheel of the second couple of wheels to pivot, when a wheel of the first couple of wheels pivots by a first steering angle about its own steering axis, and vice-versa,
wherein
- said steering transmission device is arranged along the longitudinal rod of the frame, and
- said steering transmission device is configured for causing the wheel of the second couple to pivot by a second steering angle that has substantially the same amplitude as the first steering angle and a direction opposite to the first steering angle.

The "C"-shape of the frame makes it possible to lower the forks down to a minimum level above the ground, which makes it easier to load and to unload the palletized material on/from the forks.

Since the forks are mounted to the counterframe, which is movable with respect to the frame, the movement of the forks can be actuated by a lifting means that is easier than what is provided in the prior art. Actually, it can ideally comprise up to two lifting groups, for example two hydraulic pistons, which are arranged at the two ends of the fork support counterframe. For this reason, the vehicle has lower construction and maintenance costs than the prior art vehicles used to carry a palletized material.

The features of the steering transmission device make it possible to cooperatively orientate the wheels of the first couple and of the second couple of pivoting wheels, each comprising at least one steered wheel, which allows to follow a path where very acute bends are present, as it is often the case in factories, even if the train has a large number of vehicles or wagons.

Moreover, since the actuation parts of the steering transmission device are arranged along the longitudinal rod of the frame, no obstacles are present, below and above the frame, hindering the displacement of the load arranged on the forks. In other words, the advantages of the "C"-shape of the frame can be fully exploited, while maintaining the advantages of a steering transmission system in which the front and the rear wheels (which belong to the two above-mentioned couples of wheels) pivot by respective steering angles opposite to one another, whereby a vehicle is obtained that can easily displace the loads both upwards and downwards, and that can at the same time follow a path along which very acute bends are present.

By "palletized materials" materials are meant that are arranged within containers, or loose materials such as mechanical parts, in particular materials that are arranged on carriages configured to be lifted by means of forks, or arranged on conventional pallets, or mounted to a skid.

In particular, the frame defines a room for the palletized material, and the counterframe is arranged within the room. Preferably, the frame has a substantially parallelepiped shape, and the counterframe is arranged along a parallelepiped side oriented according to the towing direction. Due to this structure, closed vehicles can be obtained in order to protect the palletized material being transported, and to hide it to strange people, if desired.

In an exemplary embodiment, at least one fork of the couple of forks has a retaining device for retaining the palletized material on the couple of forks, the retaining device comprising an unlock pedal arranged at a free end of this fork, said free end opposite to a connection end starting from which this at least one fork extends from the counterframe. This way, the transported material can be easily and steadily positioned on the forks, for a safe transport, in particular, when steering along the path, while easily allowing the material arranged on a couple of forks to be unlocked, by actuating the pedal by one foot, when the material must be unloaded from the vehicle.

Preferably, the retaining device comprises a movable locking tooth arranged to move from a locking position protruding above with respect to at least one fork, at a predetermined distance from the connection end, to a position concealed with respect to an upper surface of the fork equipped with the retaining device, when the unlock pedal is operated by an operator, in such a way that, if the unlock pedal is not actuated, a downward-protruding portion of the palletized material is retained between the movable locking tooth and the counterframe. Advantageously, a mechanical transmission is provided between the unlock pedal and the locking tooth made within a hollow structure of the fork that is equipped with the retaining device.

The distance between the locking tooth and the connection end is advantageously shorter than 25 cm, preferably it is shorter than 20 cm, more preferably it is shorter than 15 cm. In an exemplary embodiment, distance D is shorter than 10 cm.

Preferably, the movable locking tooth has a sloped profile oriented towards the free end of the at least one fork equipped with retaining device, and the unlock pedal has an elastic return element for returning the pedal to a locking position. This way, by causing the palletized material to abut against the counterframe, a downward-protruding portion of the palletized material pushes the movable locking tooth from the actual protruding position to the concealed position, and the elastic return element returns the unlock pedal and therefore the movable locking tooth to the locking position, when the downward-protruding portion of the palletized material moves beyond the movable locking tooth. This simplifies the operations that are needed to ensure a safe positioning of the transported material on the forks.

Advantageously, the structure of the vehicle comprises an auxiliary pushing element that is mounted to the connection end of the fork equipped with the retaining device, and that is arranged to be operated by the movable locking tooth when the movable locking tooth moves from the locking position to the concealed position by operating the unlock pedal. This makes it easier to remove the palletized material from the forks when unloading it, in particular if the palletized material is located on a hand truck for a further displacement out o the vehicle.

In another exemplary embodiment, the steerable towing shaft, which is associated with the conjugate pivoting wheels, comprises:
- a steering plate arranged hinged at an own central portion about a vertical pin integral to the frame;
- a handling rod that extends integrally from an end of the steering plate opposite to the frame with respect to the vertical pin, in such a way that, by horizontally displacing the handling rod, the handling rod and the steering plate are caused to perform an integral rotation about the vertical pin;
- at least one steering rod hinged, at an own first end, to the steering plate opposite to the handling rod with respect to the pin, and hinged, at an own second end opposite to the first end, to a side point at a distance from the steering axis of a respective wheel of the two conjugate pivoting wheels, in such a way that the integral rotation causes the wheel of the first couple of conjugated pivoting wheels to pivot about its own steering axis by said first steering angle.

Preferably, the steerable towing shaft comprises a couple of steering rods having respective second ends hinged to respective side points at a distance from the steering axis of respective conjugate pivoting wheels.

With such a structure of the steerable towing shaft and of the pivoting wheels, at least at one transversal side of the frame, which in this case are configured as steered wheels, i.e. controlled-direction wheels, each wagon or vehicle of a train can be oriented easily and at the right time when the train turns an acute bend, thus overcoming the limitations in connection with very acute bends that cannot be turned by trains comprising the prior art vehicles, in particular, without sliding and without causing danger to objects and living beings.

Preferably, the steering transmission device comprises two flexible tensile elements, such as ropes, or cables, or chains, or a combination of such types of tensile elements, each having a first end connected to a connection portion at a distance from the steering axis of a wheel adjacent to the longitudinal rod of the first couple of conjugate pivoting wheels, and a second end connected to a connection portion with respect to the steering axis of a wheel adjacent to the longitudinal rod of the second couple of conjugate pivoting wheels, so that a pivot movement of said wheel adjacent to said longitudinal rod of said first couple of conjugate pivoting wheels, according to said first steering angle, causes the wheel of the second couple of conjugate pivoting wheels to pivot about its own steering axis as well, by a second steering angle opposite to the first steering angle. This allows an easy construction of the steering transmission device, wherein the steering direction of the front wheel is opposite the steering direction of rear wheels, with respect to a vehicle advancement direction.

The lifting means for lifting the counterframe can be of a conventional type, and can be actuated by a means known in the art, for instance it can be operated pneumatically, or hydraulically, or electrically.

In particular, the lifting means for lifting the counterframe is operated electrically. As it will be described hereinafter, an electrical actuation makes it easier to lift/lower a plurality of counterframes independently from one another.

A structure of vehicle according to claim 9, wherein each pivoting wheel comprises
- a fixed part integral to the frame, and
- a rotatable part rotatably arranged with respect to the fixed part about its own steering axis, wherein the rotatable part comprises a pulley,
and each of the two flexible tensile elements has two respective end portions wound on respective grooves of the pulleys of the wheels of the first couple and of the second couples, between the side connection portion and an initial-contact portion, in such a way that:
- said groove is travelled according to a first rotation direction between the side connection portion and an initial-contact portion of a first flexible tensile element of the two flexible tensile elements, and
- said groove is travelled according to a second rotation direction opposite to the first rotation direction between the side connection portion and an initial-contact portion of a second flexible tensile element of the two flexible tensile elements.

In particular, two deflection elements are provided proximate to the wheels, for example idle or fixed pulleys, or small rollers or pins, in order to deflect the first and the second flexible tensile element, respectively, so that, on the groove of the pulley of each wheel of the couples of wheels, the first flexible tensile element has the end portion wound in a direction opposite to the end portion of the second flexible tensile element.

Advantageously, a further steerable towing shaft is associated with the second couple of conjugate pivoting wheels.

According to another aspect of the invention, a train for carrying a palletized material comprises:
- at least one carriage comprising a vehicle having at least two counterframes that slidingly engage respective guides integral to the frame independently from one another, from which respective couples of forks extend,
   wherein the actuator is an electric actuator;
- a proximity sensor mounted on each counterframe, the proximity sensor arranged to emit a position signal for notifying that a respective counterframe is in the lowered loading/unloading position and/or in the raised transport position;
- a tractor connected to the steerable towing shaft of the at least one carriage;
- a safety electric control unit configured for receiving the position signal coming from the proximity sensor of each counterframe, and for emitting a permission and/or a stop signal when the safety electric control unit receives from the proximity sensor of the counterframes only position signals of all the counterframes in the raised transport position, or when the safety electric control unit does not receive, from any proximity sensor, any position signal of a respective counterframe in the lowered loading/unloading position, respectively,
wherein the safety electric control unit is arranged on the tractor;
wherein the tractor is configured for allowing /stopping one's travel if the safety electric control unit emits the permission and/or the stop signal, respectively.

This makes it safer to use a train for conveying a palletized material, since it prevents the train from advancing if a single counterframe is in the lowered loading/unloading position, and a particular advantage arises when carrying a palletized material arranged on carriages, since the wheels of such carriages rest on the ground in the loading/unloading position, according to the previously described configuration.

According to another aspect of the invention, the above-mentioned objects are achieved also by a structure of vehicle for carrying a palletized material, comprising:
- a frame comprising a longitudinal rod and first and second transversal rods that extend parallel to each other starting from respective opposite ends of the longitudinal rod on the same side of the longitudinal rod, so as to form a "C"-shaped structure;
- at least one couple of forks arranged parallel to each other and mounted to the frame substantially orthogonal to the longitudinal rod;
- a first couple of conjugate pivoting wheels and a second couple of conjugate pivoting wheels that are arranged at first and second transversal rods, respectively, and that are arranged so as to allow the frame to move;
- a steerable towing shaft for towing the frame on at least one of the first couple and of the second couple of pivoting wheels, according to a towing direction;
- a steering transmission device configured for causing a wheel of the second couple of wheels to pivot, when a wheel of the first couple of wheels pivots by a first steering angle about its own steering axis, and vice-versa,
   wherein
- said steering transmission device is arranged along the longitudinal rod of the frame, and
- said steering transmission device is configured for causing the wheel of the second couple to pivot by a second steering angle that has substantially the same amplitude as the first steering angle and a direction opposite to the first steering angle, and
- the steering transmission device comprises two flexible tensile elements each having a first end connected to a connection portion at a distance from the steering axis of a wheel adjacent to the longitudinal rod of the first couple of conjugate pivoting wheels, and a second end connected to a connection portion at a distance from the steering axis of a wheel adjacent to the longitudinal rod of the second couple of conjugate pivoting wheels.

According to another aspect of the invention, the above-mentioned objects are also achieved by a structure of vehicle for carrying a palletized material, comprising:
- a frame comprising a longitudinal rod and first and second transversal rods that extend parallel to each other starting from respective opposite ends of the longitudinal rod on the same side of the longitudinal rod, so as to form a "C"-shaped structure;
- at least one couple of forks arranged parallel to each other and mounted to the frame substantially orthogonal to the longitudinal rod;
- a first couple of conjugate pivoting wheels and a second couple of conjugate pivoting wheels that are arranged at first and second transversal rods, respectively, and that are arranged so as to allow the frame to move;
- a steerable towing shaft for towing the frame on at least one of the first couple and of the second couple of pivoting wheels, according to a towing direction;
   wherein
- at least one fork of the couple of forks has a retaining device for retaining the palletized material on the couple of forks, the retaining device comprising:
   - an unlock pedal arranged at a free end of the at least one fork, said free end opposite to a connection end starting from which the at least one fork extends moving away from the frame.
   - a movable locking tooth arranged to move from a locking position protruding above with respect to at least one fork, at a predetermined distance from the connection end, to a position concealed with respect to an upper surface of the at least one fork when the unlock pedal is pressed by an operator, in such a way that, if the unlock pedal is not pressed, the palletized material is retained between the movable locking tooth and the frame.

In particular, the movable locking tooth has a sloped profile oriented towards the free end of the at least one fork equipped with the retaining device, and wherein the unlock pedal has an elastic return element arranged to return the unlock pedal to a locking position in such a way that, by pushing the palletized material to abutment towards the longitudinal rod, a downward-protruding portion of the palletized material pushes the movable locking tooth from the protruding position to the concealed position, and that the elastic return element returns the unlock pedal and therefore also the movable locking tooth to the locking position, when the downward-protruding portion of the palletized material moves beyond the movable locking tooth.

Advantageously, the structure of vehicle comprises an auxiliary pushing element mounted to the connection end of the at least one fork equipped with the retaining device, and arranged to be operated by the movable locking tooth when the movable locking tooth moves from the locking position to the concealed position by operating the unlock pedal.

### Brief description of the drawings

The invention will be now shown with the following description of its exemplary embodiments, exemplifying but not limitative, with reference to the attached drawings, in which:
- Figs. 1 and 2 are perspective front views of a structure of vehicle according to a first exemplary embodiment of the invention, with the fork-bearing counterframe and the forks in the loading/unloading position and in the transport position, respectively;
- Figs. 3 and 4 are perspective views rear of the structure of vehicle as shown in Figs. 1 and 2;
- Fig. 5 is a perspective front view of a structure of vehicle according to a second exemplary embodiment of the invention, in which two counterframes are provided for respective couples of forks which can be operated independently from one another;
- Figs. 6 and 7 are perspective views of a structure of vehicle according to a third exemplary embodiment of the invention, comprising a box-like room for palletized materials;
- Fig. 8 is a longitudinal sectional view of a fork of a vehicle according to an exemplary embodiment of the invention, equipped with a retaining device for retaining the palletized material on the forks;
- Fig. 9 is a perspective view of the fork of Fig. 8;
- Fig. 10 shows a vehicle according to a fourth exemplary embodiment of the invention, in which a removable upper portion of the frame is provided, Fig. 10A;
- Fig. 11 shows a hand truck suitable to be used with the vehicle according to the invention;
- Fig. 12 shows the vehicle according to Figs. 1,2 in use with two hand trucks according to Fig. 11;
- Fig. 13 is a perspective view of a rudder and of a steering transmission device of a vehicle according to an exemplary embodiment of the invention;
- Fig. 14 shows a train for carrying a palletized material comprising wagons having a vehicle structure according to the present invention;
- Figs. 15 and 16 show some details of the steering transmission device comprising a couple of flexible cables.

### Detailed description of the invention

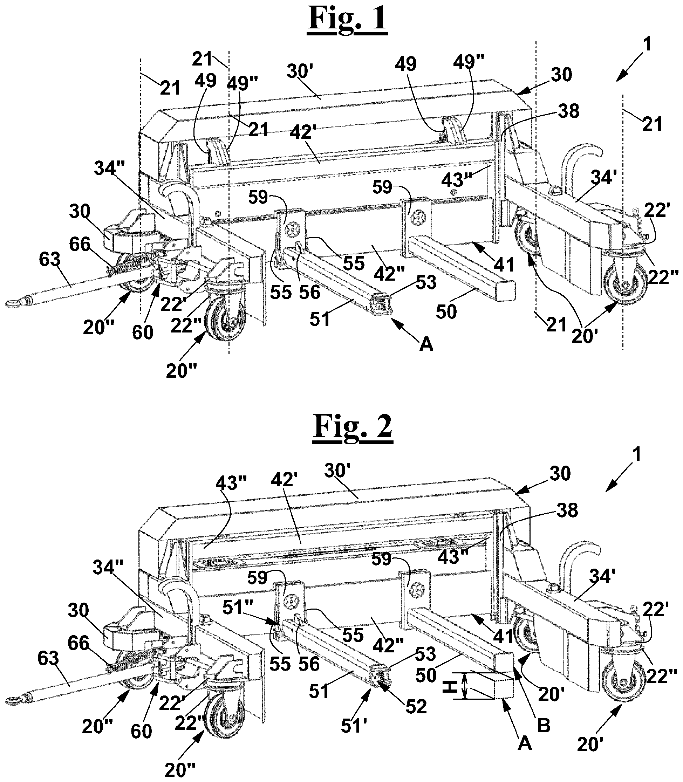

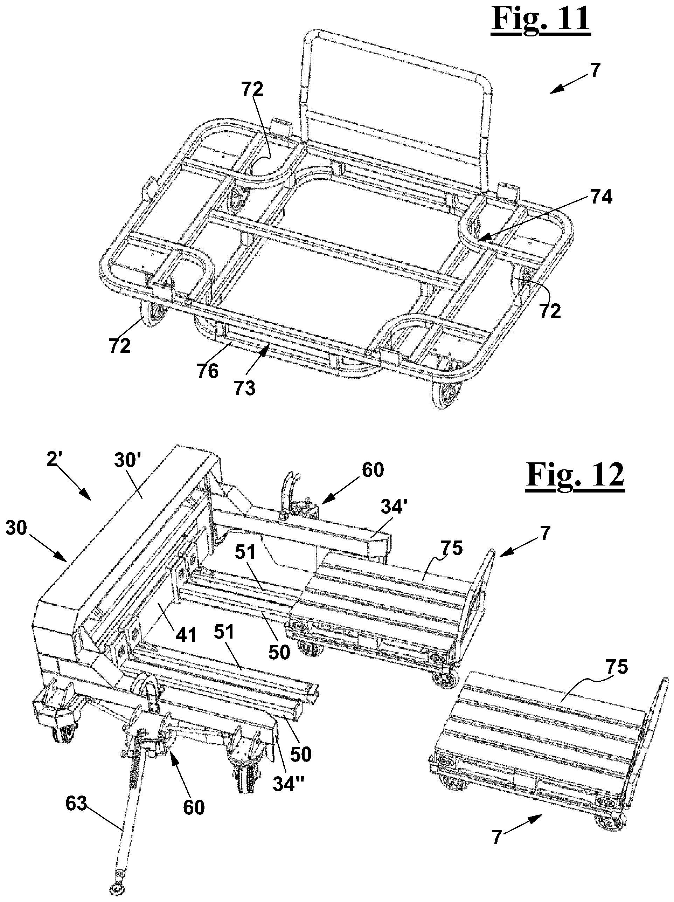

With reference to Figs. 1-4, a vehicle 1 is described according to a first exemplary embodiment of the invention, for conveying a palletized material, i.e. a material having at least one socket configured for engaging with respective lifting forks, or a material arranged on a support providing such a socket. The support can be a hand truck, as shown in Fig. 11.

Vehicle 1 includes a frame 30, comprising at least one longitudinal element or rod 30' and first and second end transversal elements or rods 34',34", which extend parallel to each other starting from respective opposite ends of longitudinal rod 30' on the same side of it, thus forming a "C"-shaped structure, in a top or bottom plan view. A plurality of wheels 20',20" is mounted to vehicle 1, each configured for pivoting about an own vertical steering axis 21 (Fig. 1), so as to allow frame 30 to move along a linear or curved path.

In the exemplary embodiment of Figs. 1-4, first and second couples of conjugate pivoting wheels 20' and 20" are provided, and wheels 20' or 20" of each couple are mounted to a respective transversal end rod 34',34". Each pivoting wheel comprises a fixed part 22' integral to frame 30 and a rotatable part 22" rotatably arranged with respect to fixed part 22' about its own steering axis 21. Preferably, the rotatable part comprises a pulley 22" of wheel 20',20".

Preferably, the wheels protrude from the profile of frame 30, with a support 22 cantilevered on one of two end transversal elements 34',34".

Moreover, a steerable towing shaft 60 is associated to at least one couple of pivoting wheels 20',20", for towing frame 30 according to a predetermined towing direction. Fig. 1 shows a non-limiting exemplary embodiment of steerable towing shaft 60, which will be described more in detail hereinafter.

According to an aspect of the invention, vehicle 1 also comprises a steering transmission device 70 that is used for causing a wheel 20" to pivot, i.e. both wheels 20" of the second couple to pivot, when a wheel 20' of the first couple pivots, by an action of steerable towing shaft 60 on the first couple of wheels. The operation of steering transmission device 70 is reciprocal, i.e. it can also cause a wheel 20', or both wheels 20' of the first couple to pivot when a wheel 20" of the second couple pivots, under the action of a further steerable towing shaft 60 associated with the second couple of conjugate wheels 20". Still according to this aspect of the invention, steering transmission device 70 is arranged along longitudinal rod 30' of frame 30 and is also configured for causing wheel 20" or 20' of the second or of the first couple to pivot by a steering angle that has substantially the same amplitude as the steering angle and has an opposite direction with respect to the steering angle, respectively, of wheel 20' or 20" of the first couple or of the second couple of conjugate wheels.

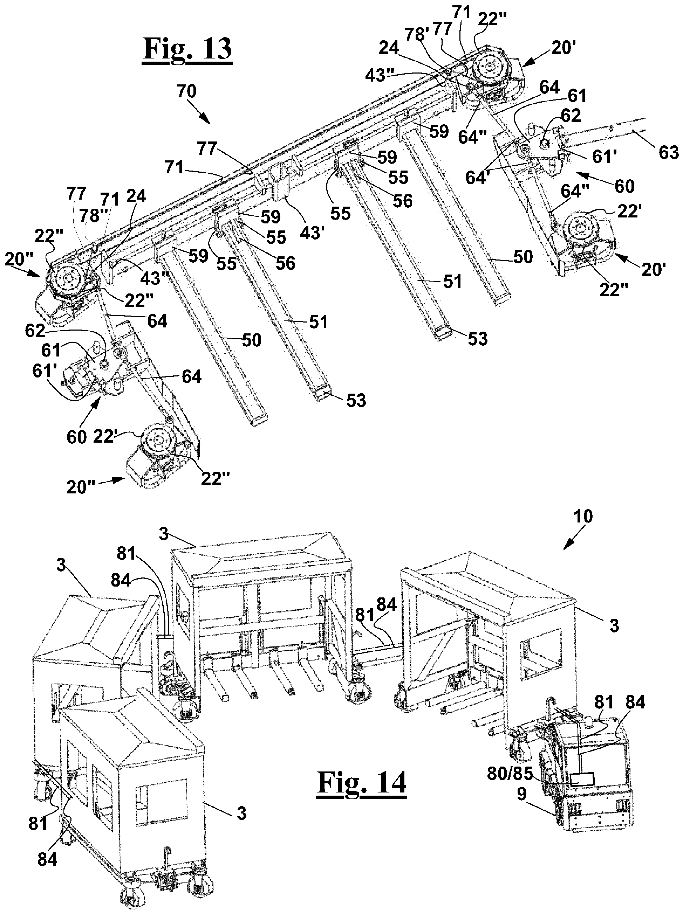

As shown in Fig. 13, in an exemplary embodiment, steering transmission device 70 comprises two flexible tensile elements 71,77, for example ropes or cables or chains, or combinations thereof, preferably cables 71,77.

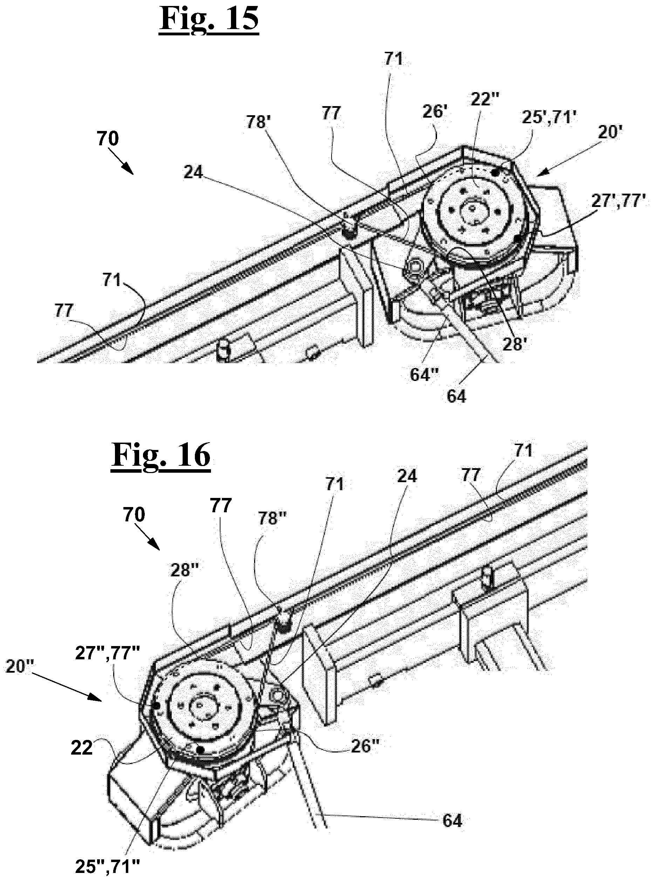

More in detail, as Figs. 15 and 16 show, each flexible tensile element 71,77 has a first end 71',77' connected to a connection portion 25',27' at a distance from steering axis 21 of a wheel 20' adjacent to longitudinal rod 30' of the first couple of conjugate pivoting wheels, and a second end 71",77" connected to a connection portion 25",27" at a distance from steering axis 21 of a wheel 20" adjacent to longitudinal rod 30' of the second couple of conjugate pivoting wheels. Connection portions 25',27' and 25",27" are chosen, for each flexible tensile element 71,77, in such a way that, by causing wheel 20' of the first couple to pivot, also wheel 20" of the second couple of conjugate pivoting wheels is caused to pivot about its own steering axis 21, by a second steering angle that has an opposite direction with respect to the first steering angle of wheel 20' of the first couple.

Each pivoting wheel 20',20" comprises a fixed part 22', i.e. a part that is integral, in this case, to frame 30, and a rotatable part 22" that is rotatably arranged with respect to fixed part 22' and, therefore, with respect to frame 30. In an exemplary embodiment, always shown for example in Fig. 13, rotatable part 22" comprises a pulley 22". Flexible tensile element 71 has two end portions, adjacent to end 71',71", respectively, each wound about pulley 22" of wheel 20',20" of the first couple or of the second couple, between connection portion 25' or 25" and an initial-contact portion 26' or 26". Similarly, flexible tensile element 77 has two end portions, adjacent to end 77',77", respectively, each wound about pulley 22" of wheel 20',20" of the first couple or of the second couple, between connection portion 27' or 27" and an initial-contact portion 28' or 28". More in detail, these end portions are wound in such a way that the groove of each pulley 22", for example the pulley of wheel 20", of the first couple, is travelled according to a first rotation direction, for example counterclockwise from above, between connection portion 25' and initial-contact portion 26' of first flexible tensile element 71 and according to an opposite second rotation direction, in this case clockwise, between connection portion 27' and initial-contact portion 28' of second flexible tensile element 77.

To this purpose, as shown in Fig. 1, two rotatable or fixed deflection pulleys or rollers or pins 78',78" can be provided proximate to wheels 20',20", in order to deflect second and first flexible tensile elements 71,77, respectively, so that first flexible tensile element 71 has its own end portion wound on the groove of pulley 22" of each wheel 20',20", in a direction opposite to the end portion of second flexible tensile element 77.

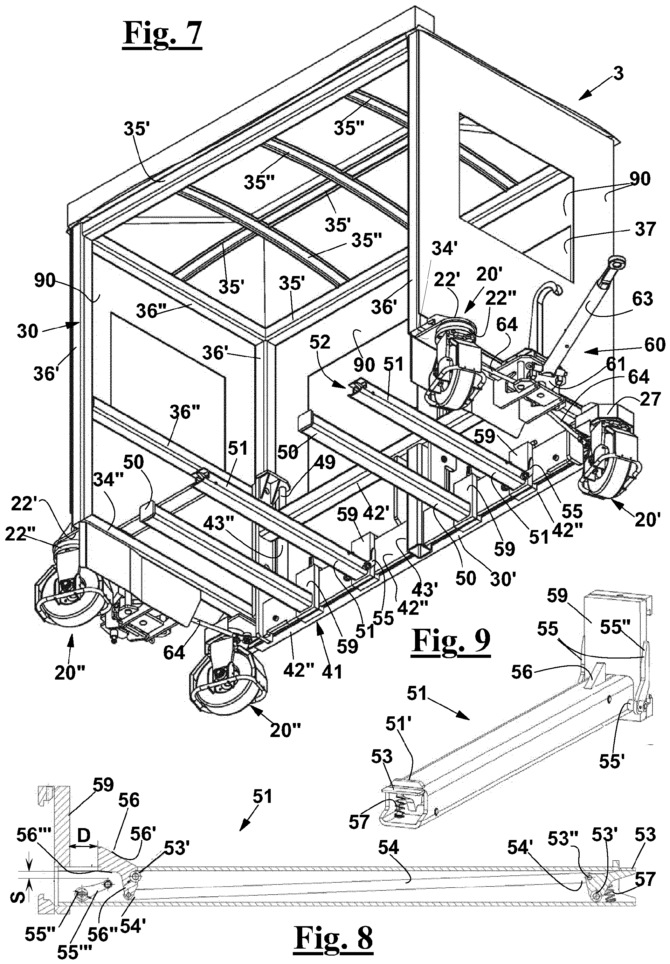

With reference to Figs. 1 and 8, in some exemplary embodiments, steerable towing shaft 60, associated with the couple of conjugate pivoting wheels 20' adjacent to a transversal side 32', comprises a steering plate 61 centrally hinged about a vertical pin 62 integral to frame 30, and a handling rod 63 that integrally extends from an end of steering plate 61 opposite to frame 30 with respect to vertical pin 62, in such a way that by horizontally displacing handling rod 63, as it occurs while steering a train comprising vehicle 1, handling rod 63 rotates integrally with steering plate 61 about vertical pin 62. Steerable towing shaft 60 also comprises at least one steering rod 64 that is hinged, at an own first end 64', to steering plate 61 opposite to handling rod 63 with respect to pin 62, whereas a second end 64", opposite to first end 64', is hinged to a side point 24, at a distance from steering axis 21, of wheel 20', which, upon turning handling rod 63 about pin 62, accordingly rotates about its own steering axis 21 by a first steering angle.

Wheel 20' that is connected to steering plate 61 by steering rod 64 is preferably the wheel that is located proximate to longitudinal rod 30' of frame 30.

The other wheel 20' may not be connected to steering plate 61, or may be connected through a further handling rod 64, as shown in the figure. Upon turning handling rod 63 about pin 62, in both cases it pivots by substantially the same first angle, due to the friction with the ground on which vehicle 1 rests, or directly under the action of steering rod 64, respectively

Concerning the second couple of conjugate wheels 20", in a conveying direction 79 of vehicle 1 from second transversal rod 34" to first transversal rod 34', as described above, a pivot movement of wheel 20", which is arranged proximate to longitudinal rod 30', is operated by flexible tensile elements 71,77. The other wheel 20", which is arranged at a longer distance from longitudinal rod 30', pivots by substantially the same first angle, due to the friction with the ground on which vehicle 1 rests, or directly under the action of a further steering rod 64, if any.

Vehicle 1 also comprises at least one couple of forks 50,51 for lifting the palletized material. Such forks 50,51 are arranged parallel to each other and mounted to frame 30 substantially orthogonal to the longitudinal direction of frame 30. More in detail, according to the invention, forks 50,51 extend from a counterframe 41 that slidingly engages with a guide 38 integral to frame 30. In vehicle 1, counterframe 41 is arranged along a longitudinal side 33' of frame 30.

In an exemplary embodiment, not shown, in which counterframe 41 is not present, forks 50,51 extend from frame 30, which is arranged to move vertically.

For instance, counterframe 41 can be a metal structure, for example it can comprise horizontally arranged longitudinal elements 42',42" that are connected to one another by vertically arranged transversal elements 43',43". Transversal elements 43',43" may have a portion which slidingly engages with guide 38. Forks 50,51 can be connected to a lower longitudinal element 42" of counterframe 41, preferably by means of engagement elements 59 slidingly arranged along lower longitudinal element 42", in order to adjust the distance between forks 50 and 51 responsive to the size and to the position of the engagement socket or of the engagement sockets of the palletized material to be lifted.

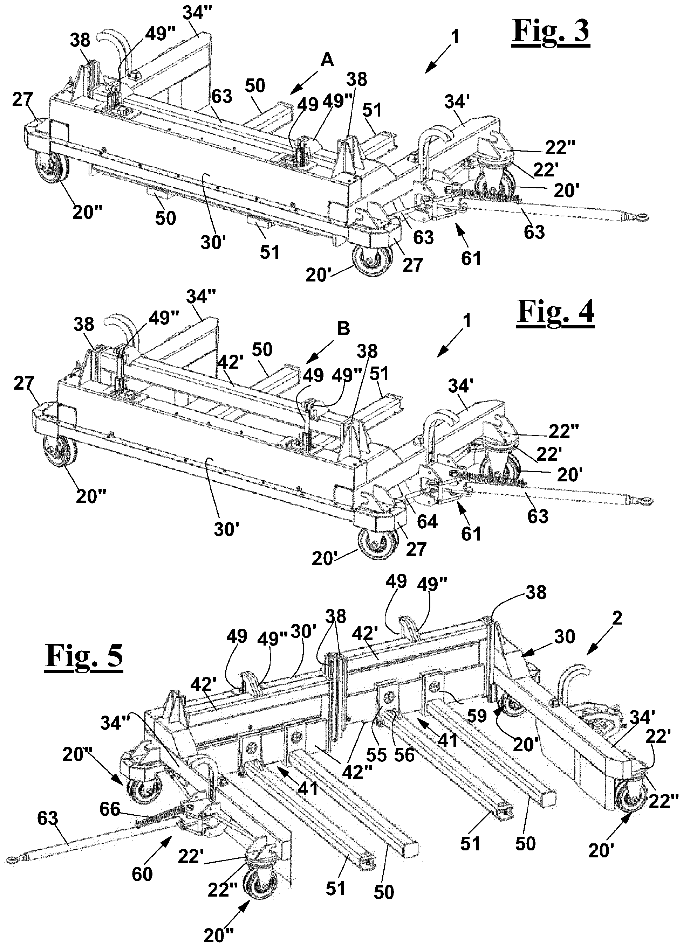

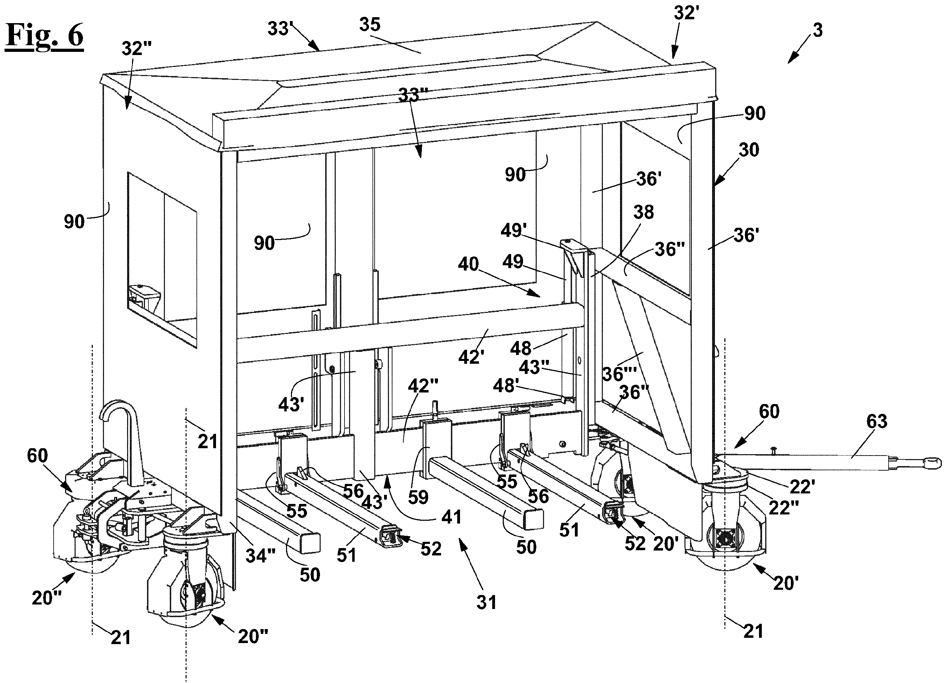

In order to displace forks 50,51, along with counterframe 41, between a lowered loading/unloading position A (Figs. 1 and 3) and a raised transport position B (Figs. 2 and 4) by a predetermined stroke H, a lifting means 40 is provided, which is described more in detail with reference to Figs. 6 and 7. The lifting means can be of a known type, for example it can comprise a couple of cylinder-piston groups, of which Figs. 1, 3, 4 show an end portion of a cylinder 49 engaged within a socket 49' that is fixed, i.e. integral to frame 30. Moreover, the lifting device can be operated conventionally, for example pneumatically, hydraulically or electrically.

With reference to Fig. 5, a vehicle 2 is described according to a second exemplary embodiment of the invention, which differs from vehicle 1 of Figs. 1-4 substantially in that it comprises two couples of forks 50,51 that extend starting from longitudinal elements of respective movable counterframes having respective own lifting devices, not shown, that can be operated independently from each other. This way, each couple of forks 50,51 can be lifted/lowered regardless of the position of the other.

According to another aspect of the invention, which is shown for instance in Figs. 1, 2, 5, 6, at least one fork 51 of couple of forks 50,51 has a retaining device 52 for retaining the palletized material above couple of forks 50,51. This retaining device 52 advantageously comprises an unlock pedal 53 arranged at a free end 51' of fork 51, opposite to an end 51" through which fork 51 is connected to counterframe 41, or to frame 30, in an exemplary embodiment not shown. Preferably, only one fork 51 of a couple of forks 50,51 has the retaining device to allow an easy unlock by an operator, which operates unlock pedal 53 by one foot.

With reference to Fig. 8, in an exemplary embodiment, retaining device 52 comprises a movable locking tooth 56 arranged to move from a locking position, in which it protrudes above fork 51, at a predetermined distance D from connection end 51", to a position concealed with respect to an upper surface of the at least one fork 51 when unlock pedal 53 is operated by an operator. This way, if the unlock pedal 53 is not actuated, a downward-protruding portion of the palletized material is retained between movable locking tooth 56 and counterframe 41, maintaining the palletized material in a safe position.

Distance D is advantageously shorter than 25 cm, preferably it is shorter than 20 cm, more preferably it is shorter than 15 cm. In an exemplary embodiment, distance D is shorter than 10 cm.

Still with reference to Fig. 8, movable locking tooth 56 may have an upper sloped profile 56' oriented towards free end 51' of fork 51, and unlock pedal 53 has an elastic return element 57 for restoring a locking position, in such a way that, by pushing the palletized material towards longitudinal rod 30' of frame 30, in particular by abutting such a material as a hand truck 7 as shown in Fig. 11, against counterframe 41, the downward-protruding portion of the palletized material pushes movable locking tooth 56 from the actual protruding position to the concealed position, and in such a way that elastic return element 57 returns unlock pedal 53 and therefore also movable locking tooth 56 in the locking position, when the downward-protruding portion of the palletized material has moved beyond movable locking tooth 56.

More in detail, unlock pedal 53 comprises a hinge 53' through which it is pivotally constrained to a lower portion of fork 51, whereas movable locking tooth 56 comprises a hinge 53' through which it is pivotally constrained to an upper portion of fork 51. Unlock pedal 53 and movable locking tooth 56 are hinged, by an own upper portion 53" and by an own lower portion 56', respectively, to a transmission rod 54, in order to cause movable locking tooth 56 to rotate counterclockwise, as depicted in Fig. 8, when unlock pedal 53 is operated, i.e. lowered. In this case, the transmission arrangement, which comprises the transmission rod, the connection hinges, and the connection portions, is housed within a recess of fork 51.

Still with reference to Fig. 8, an auxiliary pushing element 55 can be provided at connection end 51" of fork 51 that is arranged to be operated by movable locking tooth 56 when the latter moves from the locking position to the concealed position by operating unlock pedal 53. More in detail, auxiliary pushing element 55 is hinged at an own intermediate hinge portion 55' to a lower portion of fork 51, and comprises a push portion 55" and an engagement portion 55"' opposite to push portion 55" with respect to hinge portion 55', which is arranged below the movable locking tooth in such a way that, when locking tooth 56 turns from the locking position to the concealed position, it presses engagement portion 55'" and causes auxiliary pushing element 55 to rotate clockwise, as shown in Fig. 8, in such a way that push portion 55" pushes the palletized material that can be present on the forks towards end 51',52' respectively of forks 51,52, so as to make it easier to remove the palletized material from vehicle 1. Engagement portion 55'" is arranged at a distance S from the lower face 56'" of locking tooth 56, with which it engages, so that auxiliary pushing element 55 is operated when the locking tooth has disengaged the palletized material being unloaded.

Optionally, as in the third exemplary embodiment of Figs. 6 and 7, a vehicle 3 comprises a frame 30 that defines a room 31 for a palletized material. Frame 30 can be a structure made, for instance, in metal section bar. Still in the third exemplary embodiment, frame 30 can have substantially the shape of a parallelepiped that is vertically defined by the "C"-shape of frame 30, comprising a couple of transversal sides 32' and 32" and a couple of longitudinal sides 33' and 33". The structural elements can comprise, for example, uprights 36', as well as crosspieces 36" and brace elements 36'" arranged to form the transversal sides and one longitudinal side 33', while the other longitudinal side 33" is an open longitudinal side through which the palletized material can be introduced/extracted into/from room 31. A roof structure 35 can also be provided, which is also a metal structure, comprising for example such structural elements as longitudinal beams 35' and transversal beams 35", which can be obtained from a section bar. Transversal sides 32',32" and longitudinal side 33' of frame 30 can therefore comprise wall elements 90 of a stiff material or of a flexible material, in particular of an opaque material. Apertures or windows 37 can also be provided through wall elements 90.

As shown in Figs. 6 and 7, according to the invention, counterframe 41 is arranged along longitudinal side 33', i.e. along longitudinal rod 30' of the C-shaped frame facing open longitudinal side 33", therefore it is arranged within substantially parallelepiped room 31 vertically defined by the C-shape.

Lifting means 40 can comprise at least one actuator 47 as shown in Figs. 6 and 7, in this case a couple of actuators in the form of cylinder-piston groups each having one end 48' of a cylinder 48 integral to frame 30, in this case to a lower transversal element 43', and an end 49' of a piston 49, opposite to end 48', integral to counterframe 41, in this case to a cross member 36" of longitudinal side 33' along which counterframe 41 is arranged.

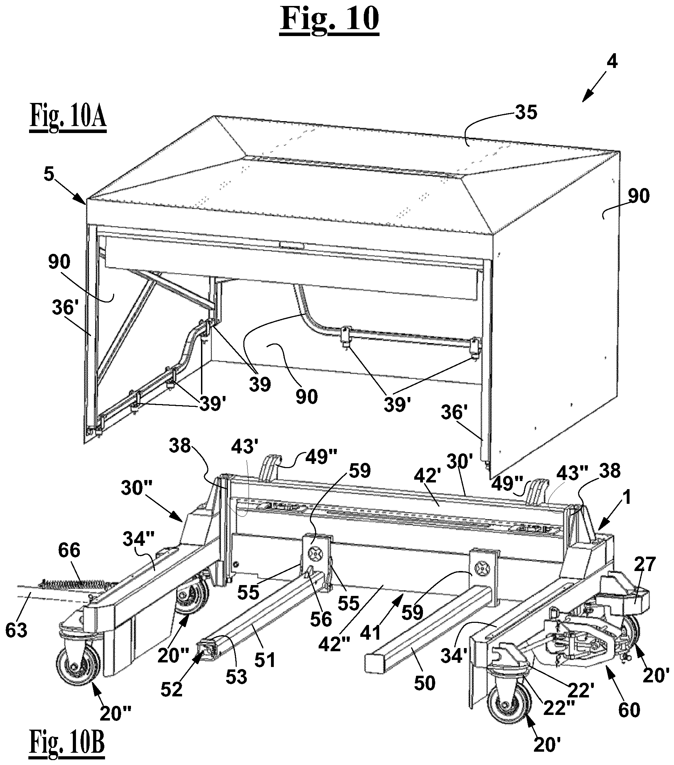

With reference to Fig. 10, a vehicle 4 is described according to a fourth exemplary embodiment of the invention, wherein a base comprises a lower portion 30" of frame 30 and counterframe 41 with respective forks 50,51, the above being made as described with reference, for instance, to the first exemplary embodiment (Figs. 1-4). Vehicle 4 also comprises an upper portion 5 of the frame that can be removed as a single piece from frame lower portion 30". Frame upper portion 5 comprises a plurality of connection members 39' quickly engageable with connection regions, not shown, that are provided along transversal elements 34',34" and longitudinal element 42' of frame lower portion 5. Preferably, as shown in Fig. 10, the connection members are connected to a metal structure 39 of frame upper portion 5 that has a profile corresponding also in elevation to the profile of frame lower portion 30".

With reference to Fig. 11, a hand truck 7 is shown that is equipped with wheels 72 and is arranged to be used in combination with the vehicle according to the invention. Hand truck 7 has a socket 73 configured to be engaged by a couple of forks 51,52 of the vehicle, according to one of the above exemplary embodiments, and is equipped with a planar support structure 74 arranged to receive a material to be conveyed, which can be mounted to a pallet 75, as shown in Fig. 12. Hand truck 7 preferably has a transversal front element 76 that protrudes downwards with respect to planar support structure 74, and is configured to engage with locking tooth 56, for firmly mounting hand truck 7 to vehicle 1, 2, 3 or 4 according to the invention.

For example, Fig. 12 shows vehicle 2 according to the second exemplary embodiment of Fig. 5, and two hand trucks 7 performing a loading or unloading operation on vehicle 2' that has a single counterframe 41 from which two couples of forks 50,51 extend that are simultaneously lifted/lowered. In particular, when hand truck 7 must be unloaded from vehicle 2', forks 50,51 and counterframe 41 are moved to loading/unloading position A, at which wheels 72 rest on the ground, so that hand truck 7 can be more easily removed from vehicle 2'. Movable locking tooth 56 maintains hand truck 7 blocked close to counterframe 41, i.e. within vehicle 2', so that hand truck 7 cannot move away in an uncontrolled way, as it could occur on a sloped ground.

The above-described vehicle structure, in the various exemplary embodiments, in connection to the counterframe, the steering transmission device, the retaining device for the palletized material, is shown with reference to a carriage or to a wagon, but can also be used to make a vehicle having its own motor, provided obvious adaptations are made.

With reference to Fig. 14, a train 10 for carrying a palletized material is described, comprising wagons that are made like the above vehicles, in this case like vehicles 3 comprising a closed frame, and that are towed by a same tractor 9 connected to the steerable towing shaft of a first carriage 3. Train 10 is shown in a steering configuration while turning an acute bend, in particular a hairpin turn.

Train 10 comprises a plurality of counterframes 41 that slidingly engage, independently from one another, with respective guides 38 integral to frames 30 of respective vehicles or carriages 3, from which respective couples of forks 50,51 extend. Wagons 3 comprise actuating means having respective actuators. The actuators can be hydraulic or pneumatic actuators 48, as shown in Figs. 6 and 7, or they can be electric actuators.

Each counterframe 41 has at least one limit switch such as a proximity sensor, configured for emitting a position signal in order to notify that a respective counterframe 41 is at its lowered loading/unloading position A (Figs. 1,3) and/or at its raised transport position B (Figs. 2,4). In this case, a safety electric control unit 85 can be arranged on tractor 9 configured for receiving, through a cable system 81, the position signals coming from the limit switch of each counterframe, and for emitting a permission signal and/or a stop signal, respectively, when all the received position signals indicate transport position B, and/or no received signal indicates loading/unloading position A. Advantageously, cable system 81 has connection/disconnection means at two transversal sides 32' and 32" (Fig. 6) of each vehicle 3. Cable system 81 can be a multicable comprising a plurality of conductors each connecting one limit switch, or it can be a single serial cable that conveys all the position signals. Control unit 85 can be electrically connected to an actuation device, not shown, of tractor 9, in order to allow the motor or the wheels of tractor 9 to operate only if position signals indicating transport position B of each counterframes 41 are provided, and/or it can be electrically connected to a block device, not shown, of tractor 9, for preventing the motor or the wheels of tractor 9 to move if any position signal indicating loading/unloading position A is present. This is used to prevent the train from moving when even one counterframe 41 is in the loading/unloading position, and possibly with the wheels of hand trucks 7 of Fig. 11 in contact with the ground.

If fluid actuators, i.e. hydraulic or pneumatic actuators, are used, a hydraulic or pneumatic control unit 80 is advantageously provided on board of tractor 9, respectively, for displacing each counterframe 41, and a distribution line 84 of an actuation fluid such as an oil, or compressed air, is also provided for the actuators of each counterframe 41, if the actuators comprise single-effect piston/cylinder groups, in order to lift all counterframes 41 at the same time, or two forward- and back lines are provided for the actuation fluid, if the actuators comprise double-acting piston/cylinder groups, in order to lift /lower all counterframes 41 at the same time.

As an alternative, the actuators of counterframes 41 can be electric actuators, which requires a control signal for operating each actuator. In this case a further cable system can be provided, not shown, for the control signals, not shown, according to the same embodiments as already discussed for cable system 81, or cable system 81 itself can be configured for conveying also the control signals for each counterframe 41, for example a single control signal.

The foregoing description exemplary embodiments of the invention will so fully reveal the invention according to the conceptual point of view, so that others, by applying current knowledge, will be able to modify and/or adapt for various applications such embodiment without further research and without parting from the invention as defined by the appended claims. The means and the materials to realise the different functions described herein could have a different nature without, for this reason, departing from the field of the invention as defined by the appended claims. It is to be understood that the phraseology or terminology that is employed herein is for the purpose of description and not of limitation.

## Claims

1. A structure of vehicle (1) for carrying a palletized material, comprising:
- a frame (30) comprising a longitudinal rod (30') and first and second transversal rods (34',34") that extend parallel to each other starting from respective opposite ends of said longitudinal rod (30') on the same side of said longitudinal rod (30'), so as to form a "C"-shaped structure;
- a counterframe (41) slidingly arranged along a guide (38) integral to said frame (30) proximate to said longitudinal rod (30');
- at least one couple of forks (50,51) arranged parallel to each other and mounted to said counterframe (41) substantially orthogonal to said longitudinal rod (30');
- a lifting means (40) for displacing said counterframe along with said forks (50,51) in a lifting direction by a predetermined stroke (H) between a lowered loading/unloading position (A) and a transport position (B) raised with respect to said loading/unloading position (A), wherein said lifting means (40) comprises at least one actuator (48) arranged to cause said counterframe (41) to carry out a relative movement with respect to said frame (30) along said guide (38) in said lifting direction,
**characterised in that** it further comprises:
- a first couple of conjugate pivoting wheels (20') and a second couple of conjugate pivoting wheels (20") that are arranged at said first and second transversal rods (34',34"), respectively, and are arranged so as to allow said frame (30) to move;
- a steerable towing shaft (60) for towing said frame (30) on at least one of said first couple and of said second couple of pivoting wheels (20',20"), according to a towing direction;
- a steering transmission device (70) configured for causing a wheel (20") of said second couple of wheels to pivot, when a wheel (20') of said first couple of wheels pivots by a first steering angle about its own steering axis (21), and vice-versa, and **in that**
- said steering transmission device (70) is arranged along said longitudinal rod (30') of said frame (30), and **in that**
- said steering transmission device (70) is configured for causing said wheel (20") of said second couple to pivot by a second steering angle that has substantially the same amplitude as and an opposite direction with respect to said first steering angle.

2. A structure of vehicle according to claim 1, wherein said frame (30) defines a room (31) for said palletized material, and said counterframe (41) is arranged within the room (31).

3. A structure of vehicle according to claim 1, wherein at least one fork (51) of said couple of forks (50,51) has a retaining device (52) for retaining said palletized material on said couple of forks (50,51), said retaining device (52) comprising an unlock pedal (53) arranged at a free end (51') of said at least one fork (51), said free end opposite to a connection end (51") starting from which said at least one fork (51) extends from said counterframe (41).

4. A structure of vehicle according to claim 3, wherein said retaining device (52) comprises a movable locking tooth (56) arranged to move from a locking position protruding above with respect to said at least one fork (51), at a predetermined distance (D) from said connection end (51"), to a position concealed with respect to an upper surface of said at least one fork (51) when said unlock pedal (53) is pressed by an operator, in such a way that, if said unlock pedal (53) is not pressed, said palletized material is retained between said movable locking tooth (56) and said counterframe (41).

5. A structure of vehicle according to claim 4, wherein said movable locking tooth (56) has a sloped profile (56') oriented towards said free end (51') of said at least one fork (51) equipped with said retaining device (52), and wherein said unlock pedal (53) has an elastic return element (57) arranged to return said unlock pedal (53) to a locking position in such a way that, by causing said palletized material to abut against said counterframe (41), a downward-protruding portion of said palletized material pushes said movable locking tooth (56) from said locking protruding position to said concealed position, and that said elastic return element (57) returns said unlock pedal (53) and therefore also said movable locking tooth (56) to said locking position, when said downward-protruding portion of said palletized material moves beyond said movable locking tooth (56).

6. A structure of vehicle according to claim 4, comprising an auxiliary pushing element (55) that is mounted to said connection end (51") of said at least one fork (51) equipped with said retaining device (52), and that is arranged to be operated by said movable locking tooth (56) when said movable locking tooth (56) moves from said locking position to said concealed position by operating said unlock pedal (53).

7. A structure of vehicle according to claim 1, wherein said steerable towing shaft (60), associated with said conjugate pivoting wheels (20') comprises:
- a steering plate (61) arranged hinged at an own central portion about a vertical pin (62) integral to said frame (30);
- a handling rod (63) that extends integrally from an end of said steering plate (61) opposite to said frame (30) with respect to said vertical pin (62), in such a way that, by horizontally displacing said handling rod (63), said handling rod (63) and said steering plate (61) are caused to perform an integral rotation about said vertical pin (62);
- at least one steering rod (64) hinged:
- at an own first end (64'), to said steering plate (61) opposite to said handling rod (63) with respect to said pin (62);
- at an own second end (64"), opposite to said first end (64'), to a side point (24) at a distance from the steering axis (21) of a respective wheel (20') of said conjugate pivoting wheels, in such a way that said integral rotation causes said wheel (20') of said first couple of conjugated pivoting wheels to pivot about said own steering axis (21) by said first steering angle.

8. A structure of vehicle according to claim 7, wherein said steerable towing shaft (60) comprises a couple of steering rods (64) having respective second ends (64") hinged to respective side points (24) at a distance from said steering axis (21) of respective conjugate pivoting wheels (20').

9. A structure of vehicle according to claim 1, wherein
- said steering transmission device (70) comprises two flexible tensile elements (71,77), in particular each selected among a rope, a cable, a chain or a combination thereof, each having a first end (71',77') connected to a connection portion (25',27') at a distance from the steering axis (21) of a wheel (20') adjacent to said longitudinal rod (30') of said first couple of conjugate pivoting wheels, and a second end (71",77") connected to a connection portion (25",27") at a distance from the steering axis (21) of a wheel (20") adjacent to said longitudinal rod (30') of said second couple of conjugate pivoting wheels, so that a pivot movement of said wheel (20') adjacent to said longitudinal rod (30') of said first couple of conjugate pivoting wheels, according to said first steering angle, causes also said wheel (20") of said second couple of conjugate pivoting wheels to pivot about said own steering axis (21), by a second steering angle opposite to said first steering angle.

10. A structure of vehicle according to claim 9, wherein each pivoting wheel (20',20") comprises
- a fixed part (22') integral to said frame (30), and
- a rotatable part (22") rotatably arranged with respect to the fixed part (22') about said steering axis (21), wherein said rotatable part (22") comprises a pulley (22"),
and each of said two flexible tensile elements (71,77) has two respective end portions wound on respective grooves of said pulleys (22") of said wheels (20',20") of said first couple and of said second couple, between said side connection portion (25',27',25",27") and an initial-contact portion (26',28',26",28"), in such a way that:
- said groove is travelled according to a first rotation direction between said side connection portion (25',25") and an initial-contact portion (26',26") of a first flexible tensile element (71) of said two flexible tensile elements (71,77), and
- said groove is travelled according to a second rotation direction opposite to said first rotation direction between said side connection portion (27',27") and an initial-contact portion (28',28") of a second flexible tensile element (77) of said two flexible tensile elements (71,77),
in particular, two deflection elements (78',78") are provided proximate to said wheels (20',20") in order to deflect said first and said second flexible tensile element (71,77), respectively, so that, on said groove of said pulley of each wheel (20',20") of said couples of wheels, said first flexible tensile element (71) has said end portion wound in a direction opposite to said end portion of said second flexible tensile element (77).

11. A structure of vehicle according to claim 7 or 8, wherein a further steerable towing shaft (60) is associated with said second couple of conjugate pivoting wheels (20").

12. A train (10) for carrying a palletized material, comprising:
- at least one carriage comprising a vehicle (1,2,3,4) according to any of the previous claims, with at least two counterframes (41) that slidingly engage respective guides (38) integral to said frame (30) independently from one another, from which respective couples of forks (50,51) extend,
- a proximity sensor mounted on each counterframe (41), said proximity sensor arranged to emit a position signal for notifying that a respective counterframe (41) is in said lowered loading/unloading position (A) and/or in said raised transport position (B);
- a tractor (9) connected to said steerable towing shaft of said at least one carriage;
- a safety electric control unit (85) configured for receiving said position signal coming from said proximity sensor of each counterframe (41), and for emitting a permission and/or a stop signal when said safety electric control unit (85) receives from said proximity sensor of said counterframes (41) only position signals of all said counterframes (41) in said raised transport position (B), or when said safety electric control unit (85) does not receive, from any proximity sensor, any position signal of a respective counterframe (41) in said lowered loading/unloading position (A), respectively
wherein said safety electric control unit (85) is arranged on said tractor (9);
wherein said tractor (9) is configured for allowing /stopping one's travel if said safety electric control unit (85) emits said permission and/or said stop signal, respectively.

13. A structure of vehicle (1) for carrying a palletized material, comprising:
- a frame (30) comprising a longitudinal rod (30') and first and second transversal rods (34',34") that extend parallel to each other starting from respective opposite ends of said longitudinal rod (30') on the same side of said longitudinal rod (30'), so as to form a "C"-shaped structure;
- at least one couple of forks (50,51) arranged parallel to each other and mounted to said frame (30) substantially orthogonal to said longitudinal rod (30'),
**characterised in that** it further comprises:
- a first couple of conjugate pivoting wheels (20') and a second couple of conjugate pivoting wheels (20") that are arranged at said first and second transversal rods (34',34"), respectively, and that are arranged so as to allow said frame (30) to move;
- a steerable towing shaft (60) for towing said frame (30) on at least one of said first couple and of said second couple of pivoting wheels (20',20"), according to a towing direction;
- a steering transmission device (70) configured for causing a wheel (20") of said second couple of wheels to pivot, when a wheel (20') of said first couple of wheels pivots by a first steering angle about its own steering axis (21), and vice-versa, and **in that**
- said steering transmission device (70) is arranged along said longitudinal rod (30') of said frame (30), and **in that**
- said steering transmission device (70) is configured for causing said wheel (20") of said second couple to pivot by a second steering angle that has substantially the same amplitude as and an opposite direction with respect to said first steering angle, and **in that**
- said steering transmission device (70) comprises two flexible tensile elements (71,77) each having a first end (71',77') connected to a connection portion (25',27') at a distance from the steering axis (21) of a wheel (20') adjacent to said longitudinal rod (30') of said first couple of conjugate pivoting wheels, and a second end (71",77") connected to a connection portion (25",27") at a distance from the steering axis (21) of a wheel (20") adjacent to said longitudinal rod (30') of said second couple of conjugate pivoting wheels.

14. A structure of vehicle (1) for carrying a palletized material, comprising:
- a frame (30) comprising a longitudinal rod (30') and first and second transversal rods (34',34") that extend parallel to each other starting from respective opposite ends of said longitudinal rod (30') on the same side of said longitudinal rod (30'), so as to form a "C"-shaped structure;
- at least one couple of forks (50,51) arranged parallel to each other and mounted to said frame (30) substantially orthogonal to said longitudinal rod (30'),
**characterised in that** it further comprises:
- a first couple of conjugate pivoting wheels (20') and a second couple of conjugate pivoting wheels (20") that are arranged at said first and second transversal rods (34',34"), respectively, and that are arranged so as to allow said frame (30) to move;
- a steerable towing shaft (60) for towing said frame (30) on at least one of said first couple and of said second couple of pivoting wheels (20',20"), according to a towing direction; and **in that**
- at least one fork (51) of said couple of forks (50,51) has a retaining device (52) for retaining said palletized material on said couple of forks (50,51), said retaining device (52) comprising:
- an unlock pedal (53) arranged at a free end (51') of said at least one fork (51), said free end opposite to a connection end (51") starting from which said at least one fork (51) extends moving away from said frame (30),
- a movable locking tooth (56) arranged to move from a locking position protruding above with respect to said at least one fork (51), at a predetermined distance (D) from said connection end (51"), to a position concealed with respect to an upper surface of said at least one fork (51) when said unlock pedal (53) is pressed by an operator, in such a way that, if said unlock pedal (53) is not pressed, said palletized material is retained between said movable locking tooth (56) and said frame (30),
in particular, said movable locking tooth (56) has a sloped profile (56') oriented towards said free end (51') of said at least one fork (51) equipped with said retaining device (52), and wherein said unlock pedal (53) has an elastic return element (57) arranged to return said unlock pedal (53) to a locking position in such a way that, by pushing said palletized material to abut towards said longitudinal rod (30'), a downward-protruding portion of said palletized material pushes said movable locking tooth (56) from said locking protruding position to said concealed position, and that said elastic return element (57) returns said unlock pedal (53) and therefore also said movable locking tooth (56) to said locking position, when said downward-protruding portion of said palletized material moves beyond said movable locking tooth (56).

15. A structure of vehicle according to claim 14, comprising an auxiliary pushing element (55) that is mounted to said connection end (51") of said at least one fork (51) equipped with said retaining device (52), and that is arranged to be operated by said movable locking tooth (56) when said movable locking tooth (56) moves from said locking position to said concealed position by operating said unlock pedal (53).

## Patentansprüche

1. Fahrzeugstruktur (1) zum Tragen eines palettierten Materials, umfassend:
- einen Rahmen (30), der eine Längsstange (30') und erste und zweite Querstange (34', 34"), die sich parallel zueinander ausgehend von jeweiligen entgegengesetzten Enden der Längsstange (30') auf der gleichen Seite der Längsstange (30') erstrecken, um eine "C"-förmige Struktur zu bilden, umfasst;
- einen Gegenrahmen (41), der verschiebbar entlang einer Führung (38) angeordnet ist, die mit dem Rahmen (30) nahe der Längsstange (30') einstückig ist;
- mindestens ein Paar von Gabeln (50, 51), die parallel zueinander angeordnet sind und am Gegenrahmen (41) im Wesentlichen rechtwinklig zur Längsstange (30') montiert sind;
- eine Hebeeinrichtung (40) zum Versetzen des Gegenrahmens zusammen mit den Gabeln (50,51) in einer Heberichtung um einen vorbestimmten Hub (H) zwischen einer gesenkten Belade-/Entladestellung (A) und einer Transportstellung (B), die in Bezug zur Belade-/Entladestellung (A) angehoben ist, wobei die Hebeeinrichtung (40) mindestens einen Stellantrieb (48) umfasst, der angeordnet ist, um zu bewirken, dass der Gegenrahmen (41) eine Relativbewegung in Bezug auf den Rahmen (30) entlang der Führung (38) in der Heberichtung durchführt,
**dadurch gekennzeichnet, dass** sie ferner Folgendes umfasst:
- ein erstes Paar von paarweise schwenkenden Rädern (20') und ein zweites Paar von paarweise schwenkenden Rädern (20"), die an der ersten bzw. zweiten Querstange (34', 34") angeordnet sind, und angeordnet sind, um zu ermöglichen, dass sich der Rahmen (30) bewegt;
- eine lenkbare Zugstange (60) zum Ziehen des Rahmens (30) an mindestens einem des ersten Paares und des zweiten Paares von schwenkenden Rädern (20',20") gemäß einer Zugrichtung;
- eine Lenkungsübertragungsvorrichtung (70), die konfiguriert ist, um zu bewirken, dass ein Rad (20") des zweiten Paares von Rädern schwenkt, wenn ein Rad (20') des ersten Paares von Rädern um einen ersten Lenkwinkel um seine eigene Lenkachse (21) schwenkt, und umgekehrt,
und **dass**
- die Lenkungsübertragungsvorrichtung (70) entlang der Längsstange (30') des Rahmens (30) angeordnet ist, und **dass**
- die Lenkungsübertragungsvorrichtung (70) konfiguriert ist, um zu bewirken, dass das Rad (20") des zweiten Paares um einen zweiten Lenkwinkel schwenkt, der im Wesentlichen die gleiche Amplitude wie der erste und eine entgegengesetzte Richtung in Bezug auf den ersten Lenkwinkel aufweist.

2. Fahrzeugstruktur nach Anspruch 1, wobei der Rahmen (30) einen Raum (31) für das palettierte Material definiert und der Gegenrahmen (41) innerhalb des Raumes (31) angeordnet ist.

3. Fahrzeugstruktur nach Anspruch 1, wobei mindestens eine Gabel (51) des Paares von Gabeln (50,51) eine Festhaltevorrichtung (52) zum Festhalten des palettierten Materials auf dem Paar von Gabeln (50,51) aufweist, wobei die Festhaltevorrichtung (52) ein Entriegelungspedal (53) umfasst, das an einem freien Ende (51') der mindestens einen Gabel (51) angeordnet ist, wobei das freie Ende einem Verbindungsende (51") entgegengesetzt ist, von welchem ausgehend sich die mindestens eine Gabel (51) von dem Gegenrahmen (41) aus erstreckt.

4. Fahrzeugstruktur nach Anspruch 3, wobei die Festhaltevorrichtung (52) einen bewegbaren Verriegelungszahn (56) umfasst, der angeordnet ist, um sich von einer Verriegelungsstellung, die in Bezug auf die mindestens eine Gabel (51) in einem vorbestimmten Abstand (D) von dem Verbindungsende (51") hervorsteht, zu einer Stellung, die in Bezug auf eine obere Fläche der mindesten einen Gabel (51) verborgen ist, wenn das Entriegelungspedal (53) durch einen Bediener gedrückt wird, so zu bewegen, dass, wenn dieses Entriegelungspedal (53) nicht gedrückt ist, das palettierte Material zwischen dem bewegbaren Verriegelungszahn (56) und dem Gegenrahmen (41) festgehalten ist.

5. Fahrzeugstruktur nach Anspruch 4, wobei der bewegbare Verriegelungszahn (56) ein abgeschrägtes Profil (56') aufweist, das zum freien Ende (51') der mindestens einen, mit der Festhaltevorrichtung (52) ausgestatteten Gabel (51) hin gerichtet ist, und wobei das Entriegelungspedal (53) ein elastisches Rückführelement (57) aufweist, das angeordnet ist, um das Entriegelungspedal (53) zu einer Verriegelungsstellung so zurückzuführen, dass, indem bewirkt wird, dass das palettierte Material an dem Gegenrahmen (41) anliegt, ein nach unten vorstehender Abschnitt des palettierten Materials den bewegbaren Verriegelungszahn (56) von der hervorstehenden Verriegelungsstellung zur verborgenen Stellung schiebt, und dass das elastische Rückführelement (57) das Entriegelungspedal (53) und daher auch den bewegbaren Verriegelungszahn (56) zur Verriegelungsstellung zurückführt, wenn sich der nach unten vorstehende Abschnitt des palettierten Materials über den bewegbaren Verriegelungszahn (56) hinaus bewegt.

6. Fahrzeugstruktur nach Anspruch 4, umfassend ein Hilfsschiebeelement (55), das am Verbindungsende (51") der mindestens einen, mit der Festhaltevorrichtung (52) ausgestatteten Gabel (51) montiert ist und das angeordnet ist, um durch den bewegbaren Verriegelungszahn (56) betrieben zu werden, wenn sich der bewegbare Verriegelungszahn (56) von der Verriegelungsstellung zur verborgenen Stellung durch Bedienen des Entriegelungspedals (53) bewegt.

7. Fahrzeugstruktur nach Anspruch 1, wobei die lenkbare Zugstange (60), in Verbindung mit den paarweise schwenkenden Rädern (20') Folgendes umfasst:
- eine Lenkplatte (61), die an einem eigenen zentralen Abschnitt gelenkig um einen mit dem Rahmen (30) einstückigen senkrechten Zapfen (62) herum angeordnet ist;
- eine Handhabungsstange (63), die sich einstückig von einem Ende der Lenkplatte (61) aus, das dem Rahmen (30) in Bezug auf den senkrechten Zapfen (62) entgegensetzt ist, so erstreckt, dass, indem die Handhabungsstange (63) horizontal versetzt wird, bewirkt wird, dass die Handhabungsstange (63) und die Lenkplatte (61) eine vollständige Drehung um den senkrechten Zapfen (62) durchführen;
- mindestens eine Lenkstange (64), die angelenkt ist:
- an einem eigenen ersten Ende (64'), an der Lenkplatte (61) entgegengesetzt der Handhabungsstange (63) in Bezug auf den Zapfen (62);
- an einem eigenen dem ersten Ende (64') entgegengesetzten zweiten Ende (64"), an einem Seitenpunkt (24) in einem Abstand von der Lenkachse (21) eines jeweiligen Rades (20') der paarweise schwenkenden Räder derart, dass die vollständige Drehung bewirkt, dass das Rad (20') des ersten Paares von paarweise schwenkenden Rädern um die eigene Lenkachse (21) herum um den ersten Lenkwinkel schwenkt.

8. Fahrzeugstruktur nach Anspruch 7, wobei die lenkbare Zugstange (60) ein Paar von Lenkstangen (64) umfasst, die jeweilige zweiten Enden (64"), die an jeweiligen Seitenpunkten (24) in einem Abstand von der Lenkachse (21) von jeweiligen paarweise schwenkenden Rädern (20') angelenkt sind, aufweisen.

9. Fahrzeugstruktur nach Anspruch 1, wobei
- die Lenkungsübertragungsvorrichtung (70) zwei flexible dehnbare Elemente (71,77) umfasst, wobei insbesondere jedes unter einem Tau, einem Seil, einer Kette oder einer Kombination davon ausgewählt ist, die jeweils ein erstes Ende (71',77'), das mit einem Verbindungsabschnitt (25',27') in einem Abstand von der Lenkachse (21) eines Rades (20') neben der Längsstange (30') des ersten Paares von paarweise schwenkenden Rädern verbunden ist, und ein zweites Ende (71",77"), das mit einem Verbindungsabschnitt (25",27") in einem Abstand von der Lenkachse (21) eines Rades (20") neben der Längsstange (30') des zweiten Paares von paarweise schwenkenden Rädern verbunden ist, aufweisen, so dass eine Schwenkbewegung des Rades (20') neben der Längsstange (30') des ersten Paares von paarweise schwenkenden Rädern, gemäß dem ersten Lenkwinkel, bewirkt, dass auch das Rad (20") des zweiten Paares von paarweise schwenkenden Rädern um die eigene Lenkachse (21) herum um einen zweiten Lenkwinkel schwenkt, der dem ersten Lenkwinkel entgegengesetzt ist.

10. Fahrzeugstruktur nach Anspruch 9, wobei jedes schwenkende Rad (20',20") Folgendes umfasst:
- ein feststehendes Teil (22'), das einstückig mit dem Rahmen (30) ist, und
- ein drehbares Teil (22"), das in Bezug auf das feststehende Teil (22') drehbar um die Lenkachse (21) herum angeordnet ist, wobei das drehbare Teil (22") eine Rillenscheibe (22") umfasst,
und jedes der zwei flexiblen dehnbaren Elemente (71,77) zwei jeweilige Endabschnitte umfasst, die um jeweilige Rillen der Rillenscheiben (22") der Räder (20',20") des ersten Paares und des zweiten Paares herum zwischen dem seitlichen Verbindungsabschnitt (25',27',25",27") und einem Anfangsberührungsabschnitt (26',28',26",28") so gewunden sind, dass:
- die Rille gemäß einer ersten Drehrichtung zwischen dem seitlichen Verbindungsabschnitt (25',25") und einem Anfangsberührungsabschnitt (26',26") eines ersten flexiblen dehnbaren Elements (71) von zwei flexiblen dehnbaren Elementen (71,77) durchlaufen wird, und
- die Rille gemäß einer der ersten Drehrichtung entgegengesetzten zweiten Drehrichtung zwischen dem seitlichen Verbindungsabschnitt (27',27") und einem Anfangsberührungsabschnitt (28',28") eines zweiten flexiblen dehnbaren Elements (77) der zwei flexiblen dehnbaren Elemente (71,77) durchlaufen wird,
wobei insbesondere zwei Umlenkelemente (78',78") nahe der Räder (20',20") bereitgestellt sind, um das erste bzw. das zweite flexible dehnbare Element (71,77) umzulenken, so dass auf der Rille der Rillenscheibe von jedem Rad (20',20") der Paare von Rädern das erste flexible dehnbare Element (71) den Endabschnitt in einer Richtung gewunden aufweist, die dem Endabschnitt des zweiten flexiblen dehnbaren Element (77) entgegengesetzt ist.

11. Fahrzeugstruktur nach Anspruch 7 oder 8, wobei eine weitere lenkbare Zugstange (60) mit dem zweiten Paar von paarweise schwenkenden Rädern (20") verbunden ist.

12. Zug (10) zum Tragen eines palettierten Materials, umfassend:
- mindestens einen Wagen, der ein Fahrzeug (1,2,3,4) gemäß einem der vorhergehenden Ansprüche umfasst, mit mindestens zwei Gegenrahmen (41), die verschiebbar mit jeweiligen Führungen (38), die einstückig mit dem Rahmen (30) sind, unabhängig voneinander im Eingriff sind, von welchen aus sich jeweilige Paare von Gabeln (50,51) erstrecken,
- einen Näherungssensor, der an jedem Gegenrahmen (41) montiert ist, wobei der Näherungssensor angeordnet ist, um ein Stellungssignal auszugeben, um zu benachrichtigen, dass ein jeweiliger Gegenrahmen (41) in der gesenkten Belade-/Entladestellung (A) und/oder in der angehobenen Transportstellung (B) ist;
- eine Zugmaschine (9), die mit der lenkbaren Zugstange des mindestens einen Wagens verbunden ist;
- ein Sicherheits-Elektrosteuergerät (85), das konfiguriert ist, um das von dem Näherungssensor von jedem Gegenrahmen (41) kommende Stellungssignal zu empfangen und um ein Genehmigungs- und/oder Stoppsignal auszugeben, wenn das Sicherheits-Elektrosteuergerät (85) von dem Näherungssensor der Gegenrahmen (41) nur Stellungssignale von sämtlichen Gegenrahmen (41) in der angehobenen Transportstellung (B) empfängt bzw. wenn das Sicherheits-Elektrosteuergerät (85) von einem Näherungssensor kein Stellungssignal eines jeweiligen Gegenrahmens (41) in der gesenkten Belade-/Entladestellung (A) empfängt,
wobei das Sicherheits-Elektrosteuergerät (85) an der Zugmaschine (9) angeordnet ist; wobei die Zugmaschine (9) konfiguriert ist, um Jemandes Fahrt zu genehmigen/stoppen, wenn das Sicherheits-Elektrosteuergerät (85) das Genehmigungs- bzw. das Stoppsignal ausgibt.

13. Fahrzeugstruktur (1) zum Tragen eines palettierten Materials, umfassend:
- einen Rahmen (30), der eine Längsstange (30') und erste und zweite Querstange (34', 34"), die sich parallel zueinander ausgehend von jeweiligen entgegengesetzten Enden der Längsstange (30') auf der gleichen Seite der Längsstange (30') erstrecken, um eine "C"-förmige Struktur zu bilden, umfasst;
- mindestens ein Paar von Gabeln (50,51), die parallel zueinander angeordnet sind und am Rahmen (30) im Wesentlichen rechtwinklig zur Längsstange (30') montiert sind,
**dadurch gekennzeichnet, dass** sie ferner Folgendes umfasst:
- ein erstes Paar von paarweise schwenkenden Rädern (20') und ein zweites Paar von paarweise schwenkenden Rädern (20"), die an der ersten bzw. zweiten Querstange (34', 34") angeordnet sind, und die angeordnet sind, um zu ermöglichen, dass sich der Rahmen (30) bewegt;
- eine lenkbare Zugstange (60) zum Ziehen des Rahmens (30) an mindestens einem des ersten Paares und des zweiten Paares von schwenkenden Rädern (20',20") gemäß einer Zugrichtung;
- eine Lenkungsübertragungsvorrichtung (70), die konfiguriert ist, um zu bewirken, dass ein Rad (20") des zweiten Paares von Rädern schwenkt, wenn ein Rad (20') des ersten Paares von Rädern um einen ersten Lenkwinkel um seine eigene Lenkachse (21) herum schwenkt, und umgekehrt,
und **dass**
- die Lenkungsübertragungsvorrichtung (70) entlang der Längsstange (30') des Rahmens (30) angeordnet ist, und **dass**
- die Lenkungsübertragungsvorrichtung (70) konfiguriert ist, um zu bewirken, dass das Rad (20") des zweiten Paares um einen zweiten Lenkwinkel schwenkt, der im Wesentlichen die gleiche Amplitude wie und eine entgegengesetzte Richtung in Bezug auf den ersten Lenkwinkel aufweist, und **dass**
- die Lenkungsübertragungsvorrichtung (70) zwei flexible dehnbare Elemente (71,77) umfasst, die jeweils ein erstes Ende (71',77'), das mit einem Verbindungsabschnitt (25',27') in einem Abstand von der Lenkachse (21) eines Rades (20') neben der Längsstange (30') von dem ersten Paar von paarweise schwenkenden Rädern verbunden ist, und ein zweites Ende (71",77"), das mit einem Verbindungsabschnitt (25",27") in einem Abstand von der Lenkachse (21) von einem Rad (20") neben der Längsstange (30') des zweiten Paares von paarweise schwenkenden Rädern verbunden ist, aufweisen.

14. Fahrzeugstruktur (1) zum Tragen eines palettierten Materials, umfassend:
- einen Rahmen (30), der eine Längsstange (30') und erste und zweite Querstange (34',34"), die sich parallel zueinander ausgehend von jeweiligen entgegengesetzten Enden der Längsstange (30') auf der gleichen Seite der Längsstange (30') erstrecken, um eine "C"-förmige Struktur zu bilden, umfasst;
- mindestens ein Paar von Gabeln (50,51), die parallel zueinander angeordnet sind und am Rahmen (30) im Wesentlichen rechtwinklig zur Längsstange (30') montiert sind,
**dadurch gekennzeichnet, dass** sie ferner Folgendes umfasst:
- ein erstes Paar von paarweise schwenkenden Rädern (20') und ein zweites Paar von paarweise schwenkenden Rädern (20"), die an der ersten bzw. zweiten Querstange (34', 34") angeordnet sind, und die angeordnet sind, um zu ermöglichen, dass sich der Rahmen (30) bewegt;
- eine lenkbare Zugstange (60) zum Ziehen des Rahmens (30) an mindestens einem des ersten Paares und des zweiten Paares von schwenkenden Rädern (20',20") gemäß einer Zugrichtung;
und **dass**
- mindestens eine Gabel (51) des Paares von Gabeln (50,51) eine Festhaltevorrichtung (52) aufweist zum Festhalten des palettierten Materials an dem Paar von Gabeln (50,51), wobei die Festhaltevorrichtung (52) Folgendes umfasst:
- ein Entriegelungspedal (53), das an einem freien Ende (51') der mindestens einen Gabel (51) angeordnet ist, wobei das freie Ende einem Verbindungsende (51") entgegengesetzt ist, von welchem ausgehend sich die mindestens eine Gabel (51) von dem Rahmen (30) weg erstreckt,
- einen bewegbaren Verriegelungszahn (56), der angeordnet ist, um sich von einer Verriegelungsstellung, die in Bezug auf die mindestens eine Gabel (51), in einem vorbestimmten Abstand (D) von dem Verbindungsende (51"), oben hervorsteht, zu einer Stellung, die in Bezug auf eine obere Fläche der mindestens einen Gabel (51) verborgen ist, wenn das Entriegelungspedal (53) durch einen Bediener gedrückt wird, so zu bewegen, dass, wenn das Entriegelungspedal (53) nicht gedrückt ist, das palettierte Material zwischen dem bewegbaren Verriegelungszahn (56) und dem Rahmen (30) festgehalten ist,
wobei insbesondere der bewegbare Verriegelungszahn (56) ein abgeschrägtes Profil (56') aufweist, das zum freien Ende (51') der mindestens einen, mit der Festhaltevorrichtung (52) ausgestatteten Gabel (51) hin gerichtet ist, und wobei das Entriegelungspedal (53) ein elastisches Rückführelement (57) aufweist, das angeordnet ist, um das Entriegelungspedal (53) zu einer Verriegelungsstellung so zurückzuführen, dass, indem das palettierte Material geschoben wird, um zur Längsstange (30') hin anzuliegen, ein nach unten vorstehender Absachnitt des palettierten Materials den bewegbaren Verriegelungszahn (56) von der hervorstehenden Verriegelungsstellung zur verborgenen Stellung schiebt, und dass das elastische Rückführelement (57) das Entriegelungspedal (53) und daher auch den bewegbaren Verriegelungszahn (56) zur Verriegelungsposition zurückführt, wenn sich der nach unten vorstehende Abschnitt des palettierten Materials über den bewegbaren Verriegelungszahn (56) hinaus bewegt.

15. Fahrzeugstruktur nach Anspruch 14, umfassend ein Hilfsschiebeelement (55), das am Verbindungsende (51") der mindestens einen, mit der Festhaltevorrichtung (52) ausgestatteten Gabel (51) montiert ist und das angeordnet ist, um durch den bewegbaren Verriegelungszahn (56) betrieben zu werden, wenn sich der bewegbare Verriegelungszahn (56) von der Verriegelungsstellung zur verborgenen Stellung durch Bedienen des Entriegelungspedals (53) bewegt.

## Revendications

1. Structure de véhicule (1) destinée au transport d'un matériel palettisé, comprenant :
- un châssis (30) comprenant une barre longitudinale (30') et une première et une seconde barres transversales (34', 34") qui s'étendent parallèlement l'une à l'autre en partant des extrémités opposées respectives de ladite barre longitudinale (30') du même côté que ladite barre longitudinale (30'), de façon à former une structure en forme de « C » ;
- un sous-châssis (41) monté coulissant le long d'un guide (38) faisant partie intégrante dudit châssis (30) à proximité de ladite barre longitudinale (30') ;
- au moins deux fourches (50, 51) disposées parallèles l'une à l'autre et montées sur ledit sous-châssis (41) sensiblement perpendiculairement à ladite barre longitudinale (30') ;
- un moyen de levage (40) pour déplacer ledit sous-châssis le long desdites fourches (50, 51) suivant une direction de levage d'une course prédéfinie (H) entre une position de chargement/déchargement abaissée (A) et une position de transport relevée (B) par rapport à ladite position de chargement/déchargement (A), ledit moyen de levage (40) comprenant au moins un actionneur (48) conçu pour amener ledit sous-châssis (41) à effectuer un déplacement relatif par rapport audit châssis (30) le long dudit guide (38) dans ladite direction de levage,
**caractérisé en ce qu'**il comprend en outre :
- un premier couple de roues pivotantes conjuguées (20') et un second couple de roues pivotantes conjuguées (20") qui sont disposées au niveau desdites première et seconde barres transversales (34', 34"), respectivement, et sont disposées de façon à permettre audit châssis (30) de se déplacer ;
- un arbre d'attelage orientable (60) pour atteler ledit châssis (30) sur au moins l'un dudit premier couple et dudit second couple de roues pivotantes (20', 20"), suivant la direction de remorquage ;
- un dispositif de transmission de direction (70) conçu pour amener une roue (20") dudit second couple de roues à pivoter, lorsqu'une roue (20') dudit premier couple de roues pivote d'un premier angle de braquage autour de son propre axe de direction (21), et vice-versa,
et **en ce que**
- ledit dispositif de transmission de direction (70) est disposé le long de ladite barre longitudinale (30') dudit châssis (30), et **en ce que**
- ledit dispositif de transmission de direction (70) est conçu pour amener ladite roue (20") dudit second couple à pivoter d'un second angle de braquage qui présente sensiblement la même amplitude que ledit premier angle de braquage et une direction opposée par rapport à celui-ci.

2. Structure de véhicule selon la revendication 1, ledit châssis (30) définissant un espace (31) pour ledit matériel palettisé, et ledit sous-châssis (41) étant disposé dans l'espace (31).

3. Structure de véhicule selon la revendication 1, au moins une fourche (51) desdites deux fourches (50,51) comportant un dispositif de retenue (52) pour retenir ledit matériel palettisé sur lesdites deux fourches (50,51), ledit dispositif de retenue (52) comprenant une pédale de déverrouillage (53) disposée au niveau d'une extrémité libre (51') de ladite au moins une fourche (51), ladite extrémité libre opposée à une extrémité de connexion (51") partant de ladite au moins une fourche (51) s'étendant à partir dudit sous-châssis (41).

4. Structure de véhicule selon la revendication 3, ledit dispositif de retenue (52) comprenant une dent de verrouillage mobile (56) conçue pour se déplacer d'une position de verrouillage faisant saillie au-dessus par rapport à ladite au moins une fourche (51), à une distance prédéfinie (D) de ladite extrémité de connexion (51"), à une position dissimulée par rapport à une surface supérieure de ladite au moins une fourche (51) lorsque ladite pédale de déverrouillage (53) est enfoncée par un opérateur, de telle sorte que, si ladite pédale de déverrouillage (53) n'est pas enfoncée, ledit matériel palettisé est retenu entre ladite dent de verrouillage mobile (56) et ledit sous-châssis (41).

5. Structure de véhicule selon la revendication 4, ladite dent de verrouillage mobile (56) présentant un profil incliné (56') dirigé vers ladite extrémité libre (51') de ladite au moins une fourche (51) équipée dudit dispositif de retenue (52), et ladite pédale de déverrouillage (53) comportant un élément de rappel élastique (57) conçu pour faire revenir ladite pédale de déverrouillage (53) à une position de verrouillage de telle sorte que, en amenant ledit matériel palettisé à venir en butée contre ledit sous-châssis (41), une partie faisant saillie vers le bas dudit matériel palettisé pousse ladite dent de verrouillage mobile (56) de ladite position saillante de verrouillage à ladite position dissimulée, et que ledit élément de rappel élastique (57) fasse revenir ladite pédale de déverrouillage (53) et donc également ladite dent de verrouillage mobile (56) à ladite position de verrouillage, lorsque ladite partie faisant saillie vers le bas dudit matériel palettisé se déplace au-delà de ladite dent de verrouillage mobile (56).

6. Structure de véhicule selon la revendication 4, comprenant un élément de poussée auxiliaire (55) qui est monté sur ladite extrémité de connexion (51") de ladite au moins une fourche (51) équipée dudit dispositif de retenue (52), et qui est conçu pour être actionné par ladite dent de verrouillage mobile (56) lorsque ladite dent de verrouillage mobile (56) se déplace de ladite position de verrouillage à ladite position dissimulée en actionnant ladite pédale de déverrouillage (53).

7. Structure de véhicule selon la revendication 1, ledit arbre d'attelage orientable (60), associé auxdites roues pivotantes conjuguées (20'), comprenant :
- une plaque de guidage (61) montée articulée au niveau d'une propre partie centrale autour d'une tige verticale (62) faisant partie intégrante dudit châssis (30) ;
- une barre de manipulation (63) qui s'étend d'un seul tenant à partir d'une extrémité de ladite plaque de guidage (61) opposée audit châssis (30) par rapport à ladite tige verticale (62), de telle sorte que, en déplaçant horizontalement ladite barre de manipulation (63), ladite barre de manipulation (63) et ladite plaque de guidage (61) sont amenées à effectuer une rotation intégrale autour de ladite tige verticale (62) ;
- au moins une barre de direction (64) articulée :
- au niveau d'une propre première extrémité (64'), sur ladite plaque de guidage (61) opposée à ladite barre de manipulation (63) par rapport à ladite tige (62) ;
- au niveau d'une propre seconde extrémité (64"), opposée à ladite première extrémité (64'), sur un point latéral (24) à une certaine distance de l'axe de direction (21) d'une roue respective (20') desdites roues pivotantes conjuguées, de telle sorte que ladite rotation intégrale amène ladite roue (20') dudit premier couple de roues pivotantes conjuguées à pivoter autour dudit propre axe de direction (21) dudit premier angle de braquage.

8. Structure de véhicule selon la revendication 7, ladite arbre d'attelage orientable (60) comprenant deux barres de direction (64) comportant des secondes extrémités respectives (64") articulées sur des points latéraux respectifs (24) à une certaine distance dudit axe de direction (21) des roues pivotantes conjuguées respectives (20').

9. Structure de véhicule selon la revendication 1,
- ledit dispositif de transmission de direction (70) comprenant deux éléments de traction flexibles (71, 77), en particulier chacun étant choisi parmi une corde, un câble, une chaîne ou une combinaison de ceux-ci, chacun comportant une première extrémité (71', 77') reliée à une partie de connexion (25', 27') à une certaine distance de l'axe de direction (21) d'une roue (20') adjacente à ladite barre longitudinale (30') dudit premier couple de roues pivotantes conjuguées, et une seconde extrémité (71", 77") reliée à une partie de connexion (25", 27") à une certaine distance de l'axe de direction (21) d'une roue (20") adjacente à ladite barre longitudinale (30') dudit second couple de roues pivotantes conjuguées, de façon à ce qu'un mouvement de pivotement de ladite roue (20') adjacente à ladite barre longitudinale (30') dudit premier couple de roues pivotantes conjuguées, suivant ledit premier angle de braquage, amène également ladite roue (20") dudit second couple de roues pivotantes conjuguées à pivoter autour dudit propre axe de direction (21), d'un second angle de braquage opposé audit premier angle de braquage.

10. Structure de véhicule selon la revendication 9, chaque roue pivotante (20', 20") comprenant
- une partie fixe (22') faisant partie intégrante dudit châssis (30), et
- une partie rotative (22") montée rotative par rapport à la partie fixe (22') autour dudit axe de direction (21), ladite partie rotative (22") comprenant une poulie (22"),
et chacun des deux éléments de traction flexibles (71, 77) comportant deux parties d'extrémité respectives enroulées sur des rainures respectives desdites poulies (22") desdites roues (20', 20") dudit premier couple et dudit second couple, entre ladite partie de connexion latérale (25', 27', 25", 27") et une partie de contact initial (26', 28', 26", 28"), de sorte que :
- ladite rainure se déplace suivant une première direction de rotation entre ladite partie de connexion latérale (25', 25") et une partie de contact initial (26', 26") d'un premier élément de traction flexible (71) desdits deux éléments de traction flexibles (71, 77), et
- ladite rainure se déplace suivant une seconde direction de rotation opposée à ladite première direction de rotation entre ladite partie de connexion latérale (27', 27") et une partie de contact initial (28', 28") d'un second élément de traction flexible (77) desdits deux éléments de traction flexibles (71, 77),
en particulier, deux éléments de déviation (78', 78") sont fournis à proximité desdites roues (20', 20") afin de faire dévier lesdits premier et second éléments de traction flexibles (71, 77), respectivement, de sorte que, sur ladite rainure de ladite poulie de chaque roue (20', 20") desdits couples de roues, ledit premier élément de traction flexible (71) comportant ladite partie d'extrémité enroulée suivant une direction opposée à ladite partie d'extrémité dudit second élément de traction flexible (77).

11. Structure de véhicule selon la revendication 7 ou 8, un arbre d'attelage orientable supplémentaire (60) étant associé audit second couple de roues pivotantes conjuguées (20").

12. Chariot tracteur (10) destiné au transport d'un matériel palettisé, comprenant :
- au moins un premier chariot comprenant un véhicule (1, 2, 3, 4) selon l'une quelconque des revendications précédentes, doté d'au moins deux sous-châssis (41) qui s'engagent par coulissement dans des guides respectifs (38) faisant partie intégrante dudit châssis (30) indépendamment l'un de l'autre, à partir desquels les couples respectifs de fourches (50, 51) s'étendent,
- un capteur de proximité monté sur chaque sous-châssis (41), ledit capteur de proximité étant conçu pour émettre un signal de position pour signaler qu'un sous-châssis respectif (41) est dans ladite position de chargement/déchargement abaissée (A) et/ou dans la position de transport relevée (B) ;
- un tracteur (9) relié audit arbre d'attelage orientable dudit au moins un chariot ;
- une unité de commande électrique de sécurité (85) conçue pour recevoir ledit signal de position provenant dudit capteur de proximité de chaque sous-châssis (41), et pour émettre une autorisation et/ou un signal d'arrêt lorsque ladite unité de commande électrique de sécurité (85) reçoit en provenance dudit capteur de proximité desdits sous-châssis (41) uniquement des signaux de position de tous lesdits sous-châssis (41) dans la position de transport relevée (B), ou lorsque ladite unité de commande électrique de sécurité (85) ne reçoit pas, en provenance de tout capteur de proximité, un quelconque signal de position d'un sous-châssis respectif (41) dans ladite position de chargement/déchargement abaissée (A), respectivement, ladite unité de commande électrique de sécurité (85) étant disposée sur ledit tracteur (9) ;
ledit tracteur (9) étant conçu pour permettre/arrêter son déplacement si ladite unité de commande électrique de sécurité (85) émet ladite autorisation et/ou ledit signal d'arrêt, respectivement.

13. Structure de véhicule (1) destinée au transport d'un matériel palettisé, comprenant :
- un châssis (30) comprenant une barre longitudinale (30') et une première et une seconde barre transversale (34', 34") qui s'étendent parallèlement l'une à l'autre en partant des extrémités opposées respectives de ladite barre longitudinale (30') du même côté que ladite barre longitudinale (30'), de façon à former une structure en forme de « C » ;
- au moins deux fourches (50, 51) disposées parallèles l'une à l'autre et montées sur ledit châssis (30) sensiblement perpendiculairement à ladite barre longitudinale (30') ;
**caractérisé en ce qu'**il comprend en outre :
- un premier couple de roues pivotantes conjuguées (20') et un second couple de roues pivotantes conjuguées (20") qui sont disposées au niveau desdites première et seconde barres transversales (34', 34"), respectivement, et qui sont disposées de façon à permettre audit châssis (30) de se déplacer ;
- un arbre d'attelage orientable (60) pour atteler ledit châssis (30) sur au moins l'un dudit premier couple et dudit second couple de roues pivotantes (20', 20"), suivant la direction de remorquage ;
- un dispositif de transmission de direction (70) conçu pour amener une roue (20") dudit second couple de roues à pivoter, lorsqu'une roue (20') dudit premier couple de roues pivote d'un premier angle de braquage autour de son propre axe de direction (21), et vice-versa,
et **en ce que**
- ledit dispositif de transmission de direction (70) est disposé le long de ladite barre longitudinale (30') dudit châssis (30), et **en ce que**
- ledit dispositif de transmission de direction (70) est conçu pour amener ladite roue (20") dudit second couple à pivoter d'un second angle de braquage qui présente sensiblement la même amplitude que ledit premier angle de braquage et une direction opposée par rapport à celui-ci, et **en ce que**
- ledit dispositif de transmission de direction (70) comprend deux éléments de traction flexibles (71, 77), chacun comportant une première extrémité (71', 77') reliée à une partie de connexion (25', 27') à une certaine distance de l'axe de direction (21) d'une roue (20') adjacente à ladite barre longitudinale (30') dudit premier couple de roues pivotantes conjuguées, et une seconde extrémité (71", 77") reliée à une partie de connexion (25", 27") à une certaine distance de l'axe de direction (21) d'une roue (20") adjacente à ladite barre longitudinale (30') dudit second couple de roues pivotantes conjuguées.

14. Structure de véhicule (1) destinée au transport d'un matériel palettisé, comprenant :
- un châssis (30) comprenant une barre longitudinale (30') et une première et une seconde barre transversale (34', 34") qui s'étendent parallèlement l'une à l'autre en partant des extrémités opposées respectives de ladite barre longitudinale (30') du même côté que ladite barre longitudinale (30'), de façon à former une structure en forme de « C » ;
- au moins deux fourches (50, 51) disposées parallèles l'une à l'autre et montées sur ledit châssis (30) sensiblement perpendiculairement à ladite barre longitudinale (30') ; **caractérisé en ce qu'**il comprend en outre :
- un premier couple de roues pivotantes conjuguées (20') et un second couple de roues pivotantes conjuguées (20") qui sont disposées au niveau desdites première et seconde barres transversales (34', 34"), respectivement, et qui sont disposées de façon à permettre audit châssis (30) de se déplacer ;
- un arbre d'attelage orientable (60) pour atteler ledit châssis (30) sur au moins l'un dudit premier couple et dudit second couple de roues pivotantes (20', 20"), suivant la direction de remorquage ;
et **en ce que**
- au moins une fourche (51) desdites deux fourches (50,51) comporte un dispositif de retenue (52) pour retenir ledit matériel palettisé sur lesdites deux fourches (50,51), ledit dispositif de retenue (52) comprenant :
- une pédale de déverrouillage (53) disposée au niveau d'une extrémité libre (51') de ladite au moins une fourche (51), ladite extrémité libre opposée à une extrémité de connexion (51") partant de ladite au moins une fourche (51) s'étendant à partir dudit châssis (30),
- une dent de verrouillage mobile (56) conçue pour se déplacer d'une position de verrouillage faisant saillie au-dessus par rapport à ladite au moins une fourche (51), à une distance prédéfinie (D) de ladite extrémité de connexion (51"), à une position dissimulée par rapport à une surface supérieure de ladite au moins une fourche (51) lorsque ladite pédale de déverrouillage (53) est enfoncée par un opérateur, de telle sorte que, si ladite pédale de déverrouillage (53) n'est pas enfoncée, ledit matériel palettisé est retenu entre ladite dent de verrouillage mobile (56) et ledit châssis (30),
en particulier, ladite dent de verrouillage mobile (56) présentant un profil incliné (56') dirigé vers ladite extrémité libre (51') de ladite au moins une fourche (51) équipée dudit dispositif de retenue (52), et ladite pédale de déverrouillage (53) comportant un dispositif de rappel élastique (57) conçu pour faire revenir ladite pédale de déverrouillage (53) à une position de verrouillage de telle sorte que, en poussant ledit matériel palettisé pour qu'il vienne en butée contre ladite barre longitudinale (30'), une partie faisant saillie vers le bas dudit matériel palettisé pousse ladite dent de verrouillage mobile (56) de ladite position saillante de verrouillage à ladite position dissimulée, et que ledit élément de rappel élastique (57) fasse revenir ladite pédale de déverrouillage (53) et donc également ladite dent de verrouillage mobile (56) à ladite position de verrouillage, lorsque ladite partie faisant saillie vers le bas dudit matériel palettisé se déplace au-delà de ladite dent de verrouillage mobile (56).

15. Structure de véhicule selon la revendication 14, comprenant un élément de poussée auxiliaire (55) qui est monté sur ladite extrémité de connexion (51") de ladite au moins une fourche (51) équipée dudit dispositif de retenue (52), et qui est conçu pour être actionné par ladite dent de verrouillage mobile (56) lorsque ladite dent de verrouillage mobile (56) se déplace de ladite position de verrouillage à ladite position dissimulée en actionnant ladite pédale de déverrouillage (53).
